(19) Europäisches Patentamt
European Patent Office
Office européen des brevets

(11) EP 4 678 615 A1

(12) **EUROPEAN PATENT APPLICATION**
published in accordance with Art. 153(4) EPC

(43) Date of publication:
**14.01.2026 Bulletin 2026/03**

(21) Application number: **24811016.5**

(22) Date of filing: **16.05.2024**

(51) International Patent Classification (IPC):
***C04B 22/08*** (2006.01) ***C04B 14/10*** (2006.01)
***C04B 14/28*** (2006.01) ***C04B 18/08*** (2006.01)
***C04B 18/14*** (2006.01) ***C04B 24/12*** (2006.01)
***C04B 24/24*** (2006.01) ***C04B 24/26*** (2006.01)
***C04B 28/02*** (2006.01)

(52) Cooperative Patent Classification (CPC):
**C04B 14/10; C04B 14/28; C04B 18/08; C04B 18/14; C04B 22/08; C04B 24/12; C04B 24/24; C04B 24/26; C04B 28/02**

(86) International application number:
**PCT/JP2024/018084**

(87) International publication number:
**WO 2024/242009 (28.11.2024 Gazette 2024/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.05.2023 JP 2023084102**

(71) Applicant: **Nippon Shokubai Co., Ltd.**
**Osaka-shi, Osaka 541-0043 (JP)**

(72) Inventors:
- **ARAI, Taichiro**
  **Suita-shi, Osaka 564-0034 (JP)**
- **MAEMOTO, Rie**
  **Suita-shi, Osaka 564-0034 (JP)**

(74) Representative: **Cabinet Beau de Loménie**
**103, rue de Grenelle / CS 90800**
**75340 Paris Cedex 07 (FR)**

(54) **ALUMINOSILICATE-CONTAINING COMPOSITION**

(57) The present invention aims to provide a composition with higher ability to enhance early strength development compared to conventional compositions. The present invention relates to an aluminosilicate-containing composition containing: an aluminosilicate; and a water-soluble polymer, the aluminosilicate-containing composition further containing at least one of an amine having a molecular weight of not more than 1,000 or a metal compound.

EP 4 678 615 A1

## Description

### TECHNICAL FIELD

The present invention relates to aluminosilicate-containing compositions. Specifically, the present invention relates to an aluminosilicate-containing composition useful for accelerating the hardening of hydraulic material compositions.

### BACKGROUND ART

A large amount of $CO_2$ is emitted in the production process of ordinary Portland cement. In order to reduce $CO_2$ emissions, concrete compositions have been proposed in which cement is replaced with supplementary cementitious materials (SCMs) such as fly ash and slag.

SCM concrete has a longer hardening time and has a problem with early strength development compared with ordinary Portland cement (OPC).

As for a technique for enhancing the early strength of concrete, Patent Literature 1 discloses an aluminosilicate-containing composition containing an aluminosilicate and a water-soluble polymer, wherein the aluminosilicate has an average particle size of 10 to 2,500 nm measured by a predetermined measuring method.

### CITATION LIST

- Patent Literature

Patent Literature 1: JP 2022-011743 A

### SUMMARY OF INVENTION

- Technical Problem

As described above, techniques for enhancing the early strength of concrete have been created, while the ability of conventional compositions to enhance early strength development is insufficient, and there has been a demand for the creation of a composition with superior ability to enhance early strength development. There has also been room for the creation of a composition capable of fully enhancing the early strength development of SCM concrete.

The present invention has been made in view of the above current state of the art and aims to provide a composition with higher ability to enhance early strength development compared to conventional compositions.

- Solution to Problem

The present inventors have conducted various studies on techniques for enhancing the early strength development of a hydraulic material composition and have found that a composition containing an aluminosilicate, a water-soluble polymer, and at least one of an amine having a molecular weight of not more than 1,000 or a metal compound can provide a hydraulic material composition exhibiting excellent early strength development. The present inventors have also found that use of a composition containing an aluminosilicate and a water-soluble polymer in a hydraulic material composition containing at least one selected from the group consisting of a filler and a substance having at least one of latent hydraulicity or pozzolanic activity allows the hydraulic material composition to exhibit higher early strength development than conventional cement compositions. In this way, the present inventors have successfully conceived a solution to the above-described problems, and thus completed the present invention.

The present invention encompasses the following aluminosilicate-containing composition, etc.

(1) An aluminosilicate-containing composition containing:

an aluminosilicate; and
a water-soluble polymer,
the aluminosilicate-containing composition further containing at least one of an amine having a molecular weight of not more than 1,000 or a metal compound.

(2) An aluminosilicate-containing composition containing:

an aluminosilicate; and
a water-soluble polymer,
the aluminosilicate-containing composition being for use in a hydraulic material composition containing at least one selected from the group consisting of a filler and a substance having at least one of latent hydraulicity or pozzolanic activity.

(3) The aluminosilicate-containing composition according to (1) or (2) above, wherein the water-soluble polymer is contained in an amount of 5 to 100% by mass relative to 100% by mass of the aluminosilicate.
(4) The aluminosilicate-containing composition according to any one of (1) to (3) above,
wherein the aluminosilicate is contained in an amount of 0.01 to 50% by mass in 100% by mass of the aluminosilicate-containing composition.
(5) The aluminosilicate-containing composition according to any one of (1) to (4) above,
wherein the amine is at least one selected from the group consisting of a primary amine, a secondary amine, and a tertiary amine.
(6) The aluminosilicate-containing composition according to any one of (1) to (5) above,
wherein the amine and the metal compound are contained in a total amount of 0.01 to 500% by mass relative to 100% by mass of the aluminosilicate.
(7) The aluminosilicate-containing composition according to any one of (1) to (6) above,
wherein the substance having at least one of latent hydraulicity or pozzolanic activity is at least one selected from the group consisting of slag, fly ash, clay, metakaolin, silica fume, silica powder, cinder ash, clinker ash, husk ash, bentonite, and calcined clay.
(8) The aluminosilicate-containing composition according to any one of (1) to (7) above,
wherein the filler is at least one selected from the group consisting of calcium carbonate, precipitated calcium carbonate, concrete fines, carbonated concreate fines, waste concrete, and gypsum.
(9) The aluminosilicate-containing composition according to any one of (1) to (8) above,

wherein the aluminosilicate-containing composition has an average particle size of 10 to 2,500 nm as measured by the following measurement method: <Method for measuring average particle size>
the average particle size is determined from a scattering intensity of an aqueous dispersion containing 0.1% by mass of the solids of the aluminosilicate-containing composition measured by a dynamic light scattering method using a particle size analyzer.

(10) The aluminosilicate-containing composition according to any one of (1) to (9) above,
wherein the water-soluble polymer has at least one functional group selected from a carboxyl group, a phosphoric acid group, a sulfonic acid group, salts of these, a phosphate ester group, and a hydroxy group.
(11) The aluminosilicate-containing composition according to any one of (1) to (10) above,
wherein the water-soluble polymer further has a (poly)oxyalkylene group.
(12) A hydraulic material composition containing:

an aluminosilicate;
a water-soluble polymer; and
at least one selected from the group consisting of a filler and a substance having at least one of latent hydraulicity or pozzolanic activity.

(13) A method for enhancing early strength of a hydraulically hardened product, the method containing:

adding the aluminosilicate-containing composition according to any one of (1) to (11) above to a hydraulic material to obtain a composition; and
hardening the composition obtained in the addition step.

- Advantageous Effects of Invention

The aluminosilicate-containing composition of the present invention having the above-mentioned structures has excellent ability to enhance early strength development, and thus can be suitably used, for example, as a hardening accelerator for hydraulic material compositions.

DESCRIPTION OF EMBODIMENTS

The following description is offered to specifically illustrate preferred embodiments of the present invention. It should be noted that the present invention is not limited only to these embodiments and the embodiments may be appropriately altered within a range of the gist of the present invention. Any combination of two or more of the following preferred embodiments of the present invention is also a preferred embodiment of the present invention. Herein, the term "the present invention" alone refers to matters common to first and second aspects of the present invention.

<Aluminosilicate-containing composition>

An aluminosilicate-containing composition of the first aspect of the present invention contains an aluminosilicate, a water-soluble polymer, and at least one of an amine having a molecular weight of not more than 1,000 or a metal compound.

When the aluminosilicate-containing composition contains a metal compound, it is considered that in the hydration reaction of cement, the heat of hydration increases through the promotion of the growth of C-S-H crystals from the silicate layer by incorporating the metal cation or alteration of the crystal morphology. This enables the composition to have excellent ability to enhance early strength development.

When the aluminosilicate-containing composition contains an amine having a molecular weight of not more than 1,000, it is considered that in the hydration reaction of cement, the heat of hydration increases through the promotion of the growth of C-S-H crystals from the silicate layer or alteration of the crystal morphology while promoting the reaction of the aluminate layer or ferrite layer. This enables the composition to have excellent ability to enhance early strength development.

In the aluminosilicate-containing composition of the first aspect of the present invention, the amount of at least one of the amine having a molecular weight of not more than 1,000 or the metal compound is not limited. Preferably, the amine and the metal compound are contained in a total amount of 0.01 to 500% by mass relative to 100% by mass of the aluminosilicate. The total amount is more preferably 1 to 100% by mass, still more preferably 5 to 70% by mass, particularly preferably 10 to 50% by mass.

When the aluminosilicate-containing composition of the first aspect of the present invention contains an amine having a molecular weight of not more than 1,000, the amount thereof is preferably 0.01 to 500% by mass relative to 100% by mass of the aluminosilicate. The amount is more preferably 1 to 100% by mass, still more preferably 5 to 70% by mass, particularly preferably 10 to 50% by mass.

When the aluminosilicate-containing composition of the first aspect of the present invention contains a metal compound, the amount thereof is preferably 0.001 to 50 mol% in 100 mol% in total of the aluminum element, silicon element, and metal compound in the aluminosilicate. The amount is more preferably 0.01 to 50 mol%, still more preferably 0.1 to 50 mol%, particularly preferably 1 to 50 mol%.

The amine may be any amine having a molecular weight of not more than 1,000, and may be a monoamine, which has one amino group, or a polyamine, which has two or more amino groups, with a monoamine or a diamine being preferred.

The amine may be a primary amine, a secondary amine, or a tertiary amine, and is preferably a tertiary amine.

The amine may have a functional group such as a hydroxy group or a carboxyl group. The functional group is preferably a hydroxy group.

The amine is preferably a compound represented by the following formula (1):

[Chem. 1]

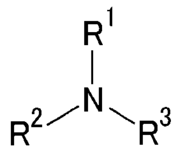

(1)

wherein $R^1$, $R^2$, and $R^3$ are the same as or different from each other and each represent a hydrogen atom or a C1-C30 hydrocarbon group optionally having a functional group, where at least one of $R^1$, $R^2$, and $R^3$ is a C1-C30 hydrocarbon group optionally having a functional group.

Examples of the functional group optionally contained in the hydrocarbon group include the above-mentioned functional groups and an amino group. When the hydrocarbon group has an amino group, the amine is a polyamine.

Non-limiting examples of the hydrocarbon group for $R^1$, $R^2$, and $R^3$ in the formula (1) include a C1-C30 aliphatic alkyl group, a C3-C30 alicyclic alkyl group, a C2-C30 alkenyl group, a C2-C30 alkynyl group, and a C6-C30 aromatic

hydrocarbon group.

Examples of the alkyl group include aliphatic alkyl groups such as methyl, ethyl, n-propyl, n-butyl, n-pentyl (amyl), n-hexyl, n-heptyl, n-octyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl, n-icosyl, i-propyl, sec-butyl, i-butyl, t-butyl, 1-methylbutyl, 1-ethylpropyl, 2-methylbutyl, i-amyl, neopentyl, 1,2-dimethylpropyl, 1,1-dimethylpropyl, t-amyl, 1,3-dimethylbutyl, 3,3-dimethylbutyl, 2-ethylbutyl, 2-ethyl-2-methylpropyl, 1-methylheptyl, 2-ethylhexyl, 1,5-dimethylhexyl, t-octyl, branched nonyl, decyl, undecyl, dodecyl, tridecyl, tetradecyl, pentadecyl, hexadecyl, heptadecyl, stearyl, and icosyl groups; and alicyclic alkyl groups such as cyclopropyl, cyclopropylmethyl, cyclobutyl, cyclobutylmethyl, cyclopentyl, cyclohexyl, cyclohexylmethyl, cycloheptyl, cyclooctyl, cyclohexylpropyl, cyclododecyl, norbornyl (C7), adamantyl (C10), and cyclopentylethyl groups.

The number of carbon atoms in the C1-C30 alkyl group is preferably 1 to 22, more preferably 1 to 18, still more preferably 1 to 12, further more preferably 1 to 8, particularly preferably 1 to 4.

Examples of the alkenyl group include vinyl, allyl, 1-butenyl, 2-butenyl, pentenyl, hexenyl, heptenyl, octenyl, nonenyl, decenyl, dodecenyl, octadecenyl, and icosenyl groups.

Examples of the alkynyl group include ethynyl, 1-propynyl, 2-propynyl, butynyl, pentynyl, hexynyl, heptynyl, octynyl, nonynyl, decynyl, dodecynyl, octadecynyl, and icosynyl groups.

The number of carbon atoms in each of the C2-C30 alkenyl and C2-C30 alkynyl groups is preferably 2 to 22, more preferably 2 to 18, still more preferably 2 to 12, further more preferably 2 to 8, particularly preferably 2 to 4.

Examples of the C6-C30 aromatic hydrocarbon group include aryl groups such as phenyl, naphthyl, methylphenyl, 1-methoxy-4-methylphenyl, ethylphenyl, propylphenyl, butylphenyl, butylmethylphenyl, dimethylphenyl, diethylphenyl, dibutylphenyl, and biphenyl groups; and aralkyl groups such as benzyl, 1-phenylethyl, 2-phenylethyl, 3-phenylpropyl, 4-phenylbutyl, styryl (Ph-CH=C-), cinnamyl (Ph-CH=$CHCH_2$-), 1-benzocyclobutenyl, and 1,2,3,4-tetrahydronaphthyl groups.

Specific examples of the primary amine include monoalkylamines such as methylamine, ethylamine, propylamine, isopropylamine, butylamine, amylamine, hexylamine, heptylamine, octylamine, nonylamine, decylamine, undecylamine, dodecylamine (laurylamine), tridodecylamine, tetradecylamine (myristylamine), pentadecylamine, cetylamine, stearylamine, oleylamine, and cocoalkylamines; and compounds in which the alkyl group of any of these has a functional group such as a hydroxy group or an amino group.

Specific examples of the secondary amine include dialkylamines such as dimethylamine, ethylmethylamine, diethylamine, dipropylamine, diisopropylamine, and dibutylamine, and compounds in which the alkyl group of any of these has a functional group such as a hydroxy group or an amino group.

Specific examples of the tertiary amine include trialkylamines such as trimethylamine, triethylamine, tripropylamine, tributylamine, and triamylamine; dialkylarylamines such as dimethylaniline and diethylaniline; triarylamines such as triphenylamine; triaralkylamines such as tribenzylamine; and compounds in which the alkyl group and/or the aromatic group of any of these compounds has a functional group such as a hydroxy group or an amino group.

In a preferred embodiment of the present invention, the amine has a hydroxy group. Specific examples of the amine having a hydroxy group include mono-, di-, or tri-alkanolamines such as monoethanolamine, diethanolamine, triethanolamine, monopropanolamine, monoisopropanolamine, diisopropanolamine, triisopropanolamine, dimethylaminoethanol, ethyldiethanolamine, dimethylaminopropanol, 2-amino-2-methyl-1,3-propanediol, 2-amino-2-ethyl-1,3-propanediol, 2-amino-2-methyl-1-propanol, and trishydroxymethylaminomethane. Of these, triisopropanolamine, triethanolamine, diisopropanolamine, ethyldiethanolamine, and dimethylaminoethanol are preferred, with triisopropanolamine being more preferred.

In a preferred embodiment of the present invention, the amine is a polyamine.

Specific examples of the polyamine include ethylenediamine, propanediamine, butanediamine, tetramethylethylenediamine, trimethyldiethylenediamine, ethylethylenediamine, diethylethylenediamine, diethylenetriamine, pentamethyldiethylenetriamine, pentamethyldipropylenetriamine, triethylenetetramine, tetraethylenepentamine, pentaethylenehexamine, polyallylamine, and polyethyleneimine. Of these, tetramethylethylenediamine and pentamethyldiethylenetriamine are preferred, with tetramethylethylenediamine being more preferred.

It suffices that the molecular weight of the amine is not more than 1,000, preferably 70 to 600, more preferably 70 to 500, still more preferably 70 to 300.

The metal compound may be any compound containing a metal and being different from the aluminosilicate and the components contained in cement. Examples of the metal compound include an inorganic compound, an organic acid salt, and a complex (coordination compound).

Non-limiting examples of a metal element in the metal compound include monovalent metals such as lithium, sodium, potassium, rubidium, cesium, silver, and copper (I); divalent metals such as magnesium, calcium, barium, iron (II), zinc, copper (II), manganese (II), chromium (II), nickel (II), and cobalt (II); trivalent metals such as iron (III), nickel (III), cobalt (III), aluminum, gallium, chromium (III), zirconium (III), manganese (III), yttrium, lanthanum, cerium (III), and gadolinium; and tetravalent metals such as nickel (IV), cobalt (IV), titanium, zirconium (IV), and manganese (IV).

Of these, alkali metals such as lithium and sodium, alkaline earth metals such as magnesium and calcium, and

zinc and iron are preferred, for example.

Examples of the inorganic compound include sulfates, carbonates, halides, nitrates, phosphates, silicates, hydroxides, oxides, sulfides, tellurides, and intermetallic compounds. Of these, sulfates, nitrates, and carbonates are preferred. For example, lithium sulfate, sodium sulfate, magnesium sulfate, zinc sulfate, iron sulfate, sodium nitrate, lithium nitrate, magnesium nitrate, zinc nitrate, iron nitrate, sodium carbonate, lithium carbonate, magnesium carbonate, zinc carbonate, and iron carbonate are more preferred, with sodium sulfate being still more preferred.

The organic acid salt may be any organic acid salt containing a metal element, and examples thereof include carboxylates and sulfonates.

Examples of the carboxylates include acetates and oxalates. Acetates are preferred, with sodium acetate, lithium acetate, magnesium acetate, zinc acetate, and iron acetate being more preferred and sodium acetate being still more preferred.

The complex may be any complex containing a metal element, and examples thereof include an ammine complex, a cyano complex, a halogeno complex, a hydroxy complex, a phthalocyanine complex, a porphyrin complex, a carbonyl complex, a salen complex, an ethylenediamine complex, a $\beta$-diketone complex, and a $\beta$-diketoester complex.

An aluminosilicate-containing composition of the second aspect of the present invention contains an aluminosilicate and a water-soluble polymer, and is for use in a hydraulic material composition containing at least one selected from the group consisting of a filler and a substance having at least one of latent hydraulicity or pozzolanic activity.

A substance having latent hydraulicity does not harden merely through mixing with water, while it hardens in the presence of an activator such as an alkali or a sulfate, and transforms into a sparingly soluble hydrate.

A substance having pozzolanic activity does not harden by itself, while it easily reacts with calcium hydroxide to form an insoluble, hardening compound.

The substance having at least one of latent hydraulicity or pozzolanic activity is a substance different from the aluminosilicate described above.

The present inventors have found that combining an aluminosilicate and a water-soluble polymer with at least one selected from the group consisting of a filler and a substance having at least one of latent hydraulicity or pozzolanic activity can provide a hydraulic material composition exhibiting excellent early strength development compared to a composition produced using a conventional hardening accelerator.

Specific examples of the substance having latent hydraulicity include slag, oil shale, and calcium fly ash.

Specific examples of the substance having pozzolanic activity include clay, siliceous fly ash, metakaolin, silica fume, silica powder, cinder ash, clinker ash, husk ash, bentonite, calcined clay, pumice, tuff, diatomaceous earth, opal rock, morel, sedimentary rocks such as geyserite, agroforestry waste, stone masonry waste, decorative stone waste, paper sludge, and glass powder.

Preferably, the substance having at least one of latent hydraulicity or pozzolanic activity is slag, fly ash, clay, metakaolin, silica fume, silica powder, cinder ash, clinker ash, husk ash, bentonite, or calcined clay.

Specific examples of the filler include calcium carbonate, precipitated calcium carbonate, concrete fines, carbonated concreate fines, waste concrete, marble powder, and gypsum. Of these, calcium carbonate, precipitated calcium carbonate, concrete fines, carbonated concreate fines, waste concrete, and gypsum are preferred.

In a preferred embodiment of the second aspect of the present invention, the aluminosilicate-containing composition is for use in a hydraulic material composition containing at least one selected from the group consisting of calcium carbonate, slag, fly ash, precipitated calcium carbonate, calcined clay, and gypsum. More preferably, the aluminosilicate-containing composition is for use in a hydraulic material composition containing at least one selected from the group consisting of calcium carbonate, precipitated calcium carbonate, calcined clay, slag, and gypsum.

In the hydraulic material composition in which the aluminosilicate-containing composition of the second aspect of the present invention is used, the total amount of the filler and the substance having at least one of latent hydraulicity or pozzolanic activity is preferably, but not limited to, 0.1 to 1,000% by mass relative to 100% by mass of the cement. The total amount is more preferably 0.1 to 100% by mass, still more preferably 5 to 80% by mass, further more preferably 8 to 50% by mass, still further more preferably 10 to 45% by mass, particularly preferably 10 to 35% by mass.

The amount of the substance having at least one of latent hydraulicity or pozzolanic activity in the hydraulic material composition is preferably, but not limited to, 0 to 1,000% by mass relative to 100% by mass of the cement. The amount is more preferably 0.1 to 100% by mass, still more preferably 5 to 80% by mass, further more preferably 8 to 50% by mass, still further more preferably 10 to 45% by mass, particularly preferably 10 to 35% by mass.

The amount of the filler in the hydraulic material composition is preferably, but not limited to, 0 to 1,000% by mass relative to 100% by mass of the cement. The amount is more preferably 0.1 to 100% by mass, still more preferably 1 to 50% by mass, further more preferably 5 to 40% by mass, still further more preferably 5 to 30% by mass, particularly preferably 10 to 20% by mass.

The aluminosilicate in the aluminosilicate-containing composition of the present invention may be any compound having a structure in which some of the silicon atoms in a silicate are replaced with aluminum atoms. For example, the aluminosilicate may be represented by the following formula (2):

$$PM^1_2O \cdot qAl_2O_3 \cdot rSiO_2 \cdot mH_2O \qquad (2)$$

wherein p, q, r, and m represent integers; and $M^1$ represents an alkali metal atom.

The aluminosilicate-containing composition preferably has an average particle size of 10 to 2,500 nm as measured by the measurement method described below. It is believed that the aluminosilicate having an average particle size within the above range can increase the conversion rate of calcium hydroxide contained in the hydraulic material composition into calcium silicate hydrate, calcium aluminate hydrate, or aluminum calcium silicate hydrate, thereby accelerating the pozzolanic reaction and more sufficiently enhancing early strength development.

The average particle size of the aluminosilicate-containing composition is more preferably 10 to 2,000 nm, still more preferably 10 to 1,000 nm, further more preferably 10 to 800 nm, still further more preferably 10 to 500 nm, still further more preferably 10 to 400 nm, particularly preferably 10 to 350 nm.

The amount of silicon atoms in the aluminosilicate-containing composition is preferably 1 to 1,000 mol% relative to 100 mol% of aluminum atoms.

The aluminosilicate-containing composition may contain an aluminum-containing compound and/or a silicon-containing compound in addition to the aluminosilicate and the water-soluble polymer. The amount of silicon atoms is based on the total amount of silicon atoms in the aluminosilicate and the silicon-containing compound, and the amount of aluminum atoms is based on the total amount of aluminum atoms in the aluminosilicate.

The amount of silicon atoms is more preferably 1 to 800 mol%, still more preferably 10 to 250 mol%, particularly preferably 50 to 150 mol%.

Non-limiting examples of the aluminum-containing compound and silicon-containing compound include unreacted raw materials in the production of an aluminosilicate-containing composition.

Examples of the aluminum-containing compound include aluminum sulfate, aluminum nitrate, aluminum chloride, basic aluminum acetate, acetoxy(formyloxy)aluminum hydroxide , and aluminum acetylacetonate, with aluminum sulfate being preferred.

Examples of the silicon-containing compound include alkali metal salts of metasilicic acid, such as sodium metasilicate, and alkali metal salts of silicic acid, with sodium metasilicate being preferred.

The amount of the aluminosilicate is preferably 0.5 to 50% by mass in 100% by mass of the aluminosilicate-containing composition. The amount is more preferably 1 to 50% by mass, still more preferably 5 to 40% by mass, particularly preferably 5 to 30% by mass.

The aluminosilicate-containing composition preferably contains water, and the aluminosilicate is preferably dispersed in 100 g of water in an amount of 0.5 to 50 g, more preferably 1 to 50 g, still more preferably 5 to 40 g, particularly preferably 5 to 30 g.

The aluminosilicate-containing composition contains a water-soluble polymer, and the amount thereof is preferably 0.025 to 90.9% by mass in 100% by mass of the aluminosilicate-containing composition. When the amount of the water-soluble polymer is within the above range, the aluminosilicate-containing composition can more sufficiently prevent the inhibition of cement nuclei formation, and can have higher ability to enhance early strength development. The amount of the water-soluble polymer is more preferably 0.1 to 50% by mass, still more preferably 0.5 to 30% by mass, particularly preferably 1 to 20% by mass.

The amount of the water-soluble polymer is preferably 5 to 1,000% by mass relative to 100% by mass in total of the aluminosilicate, the aluminum-containing compound, and the silicon-containing compound. The amount of the water-soluble polymer is more preferably 5 to 100% by mass, still more preferably 10 to 75% by mass, particularly preferably 20 to 50% by mass.

The water-soluble polymer may be any one having an insoluble content of not more than 50 g when 100 g of the polymer is dissolved in 100 g of water. The water-soluble polymer preferably has at least one functional group selected from a carboxyl group, a phosphoric acid group, a sulfonic acid group, salts of these, a phosphate ester group, and a hydroxy group.

Of these, a carboxyl group, a phosphoric acid group, a sulfonic acid group, and salts of these are preferred, with a carboxyl group or a salt thereof being more preferred.

The weight average molecular weight of the water-soluble polymer is preferably, but not limited to, 1,000 to 100,000. The weight average molecular weight is more preferably 2,000 to 80,000, still more preferably 3,000 to 50,000, further more preferably 5,000 to 40,000, still further more preferably 6,000 to 30,000, particularly preferably 8,000 to 20,000. The weight average molecular weight of the water-soluble polymer can be measured by GPC under the measurement conditions described in the

EXAMPLES.

When the water-soluble polymer has at least one functional group selected from a carboxyl group, a phosphoric

acid group, a sulfonic acid group, salts of these, a phosphate ester group, and a hydroxy group, and has a weight-average molecular weight within the above-mentioned preferred range, the functional group(s) can be adsorbed to the aluminosilicate, the aluminosilicate can be more sufficiently dispersed due to the steric repulsion of the water-soluble polymer, and aggregation of the aluminosilicate can be more sufficiently prevented. This further increases the conversion rate of calcium components contained in the hydraulic material composition into calcium silicate hydrate, calcium aluminate hydrate, or aluminum calcium silicate hydrate, thereby further accelerating the pozzolanic reaction and further enhancing early strength development.

When the water-soluble polymer has at least one selected from a carboxyl group, a phosphoric acid group, a sulfonic acid group, and salts of these, the proportion of structural units derived from monomers having at least one selected from a carboxyl group, a phosphoric acid group, a sulfonic acid group, and salts of these (hereinafter also referred to as monomers having an acid group) is preferably 50 to 95 mol% in 100 mol% of all structural units. Thereby, the adsorption to the aluminosilicate can be further enhanced. The proportion of structural units derived from monomers having an acid group is more preferably 65 to 95 mol%, still more preferably 70 to 95 mol%, particularly preferably 80 to 90 mol%.

Non-limiting examples of the water-soluble polymer having a carboxyl group or a salt thereof (hereinafter also referred to as a carboxylic acid-based water-soluble polymer) include a polymer having a structural unit derived from an unsaturated carboxylic acid-based monomer and a polymer having a structural unit derived from a monomer having a carboxyl group and an aromatic group.

The unsaturated carboxylic acid-based monomer is preferably an unsaturated monocarboxylic acid-based monomer or an unsaturated dicarboxylic acid-based monomer, for example. It suffices that the unsaturated monocarboxylic acid-based monomer has one unsaturated group and one group capable of forming a carbanion in the molecule. Preferred examples of the unsaturated monocarboxylic acid-based monomer include (meth)acrylic acid, crotonic acid, tiglic acid, 3-methylcrotonic acid, 2-methyl-2-pentenoic acid, and itaconic acid; and monovalent metal salts thereof, divalent metal salts thereof, ammonium salts thereof, and organic amine salts thereof.

It suffices that the unsaturated dicarboxylic acid-based monomer has one unsaturated group and two groups each capable of forming a carbanion in the molecule. Preferred examples of the unsaturated dicarboxylic acid-based monomer include maleic acid, itaconic acid, mesaconic acid, citraconic acid, and fumaric acid; monovalent metal salts thereof, divalent metal salts thereof, ammonium salts thereof, and organic amine salts thereof; anhydrides thereof; and half esters thereof.

The monomer having a carboxyl group and an aromatic group includes one or more monomers selected from a benzene compound having a carboxyl group and optionally a substituent different from a carboxyl group, and a naphthalene compound having a carboxyl group and optionally a substituent different from a carboxyl group. A benzene compound having a carboxyl group and optionally a substituent different from a carboxyl group is preferred. Specifically, the monomer having a carboxyl group and an aromatic group includes one or more monomers selected from hydroxybenzoic acid, benzoic acid, isophthalic acid, oxynaphthoic acid, and isomers thereof. One or more monomers selected from hydroxybenzoic acid and benzoic acid are preferred, with hydroxybenzoic acid being more preferred.

The water-soluble polymer having a phosphoric acid group, a salt thereof, or a phosphate ester group (hereinafter also referred to as a phosphoric acid-based water-soluble polymer) may be any one and preferably has a group represented by the following formula (3):

$$-OPO_3M^2{}_2 \qquad (3)$$

wherein $M^2$s are the same as or different from each other and each represent a hydrogen atom, a monovalent metal atom, a divalent metal atom, a trivalent metal atom, an organic amine group, or a hydrocarbon group optionally having a substituent.

Non-limiting examples of the hydrocarbon group optionally having a substituent include groups derived from aromatic alcohols and groups derived from quinones.

The water-soluble polymer having a phosphoric acid group, a salt thereof, or a phosphate ester group preferably has a structural unit derived from a monomer having a phosphoric acid (salt) group and/or a phosphate ester group and an aromatic group (hereinafter also referred to as a phosphoric acid group-containing monomer).

In particular, the water-soluble polymer more preferably has a structural unit represented by the following formula (4):

[Chem. 2]

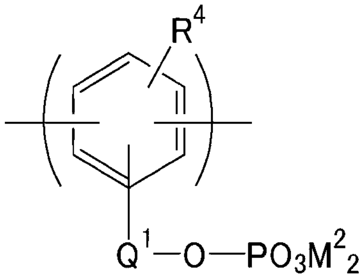

(4)

wherein $M^2$s are the same as or different from each other and each represent a hydrogen atom, a monovalent metal atom, a divalent metal atom, a trivalent metal atom, an organic amine group, or a hydrocarbon group optionally having a substituent; $Q^1$ represents a direct bond or a divalent linking group; and $R^4$ represents a hydrogen atom or a substituent different from a phosphate salt group and a phosphate ester group.

The bonding positions and numbers of $Q^1$-$OPO_3M^2{}_2$ and $R^4$ are not limited, and a plurality of $Q^1$-$OPO_3M^2{}_2$ groups and/or a plurality of $R^4$s may be present.

$Q^1$ may be any divalent linking group, and is preferably a divalent hydrocarbon group optionally having a heteroatom. A (poly)oxyalkylene group is more preferred. Specific and preferred examples of the oxyalkylene group include the same oxyalkylene groups as described below, with an oxyethylene group being most preferred. The average number of moles of (poly)oxyalkylene groups added is preferably 1 to 10, more preferably 1 to 5, still more preferably 1 to 2, most preferably 1.

Examples of the substituent for $R^4$ include an aliphatic hydrocarbon group such as a C1-C10 alkyl group or a C1-C10 alkenyl group, an alkoxy group, a hydroxy group, an acyl group, an ether group, an amide group, an ester group, a ketone group, a carboxyl group, salts of a carboxyl group, a sulfonic acid group, salts of a sulfonic acid group, and a (poly) alkylene glycol chain-containing group.

Specific examples of the phosphoric acid group-containing monomer include phosphates of quinones and phosphates of aromatic alcohols such as phenoxyethanol, phenoxydiglycol, (methoxyphenoxy)ethanol, methylphenoxyethanol, bis(β-hydroxyethyl)hydroquinone ether, nonylphenol, phenol, cresol, resorcinol, catechol, hydroquinone, naphthol, and furfuryl alcohol.

Specific examples of the phosphates include phenoxyethanol phosphate, phenoxydiglycol phosphate, (methoxyphenoxy)ethanol phosphate, methylphenoxyethanol phosphate, bis(β-hydroxyethyl)hydroquinone ether phosphate, bis(β-hydroxyethyl)hydroquinone ether diphosphate, and nonylphenol phosphate.

Of these, phenoxyethanol phosphate, phenoxydiglycol phosphate, and bis(β-hydroxyethyl)hydroquinone ether diphosphate are preferred, with phenoxyethanol phosphate being more preferred.

The phosphorylation of the aromatic alcohols and quinones is preferably performed using a phosphorus compound such as phosphoric acid (salt) or polyphosphoric acid (salt).

Non-limiting examples of the water-soluble polymer having a sulfonic acid group or a salt thereof (hereinafter also referred to as a sulfonic acid-based water-soluble polymer) include a polymer having a structural unit derived from an unsaturated sulfonic acid-based monomer and a polymer having a structural unit derived from a monomer having a sulfonic acid group and an aromatic group. Examples of the polymer having a structural unit derived from a monomer having a sulfonic acid group and an aromatic group include naphthalenesulfonic acid formaldehyde condensates, melaminesulfonic acid formaldehyde condensates, ligninsulfonic acid, and polystyrenesulfonates.

The unsaturated sulfonic acid-based monomer may be any monomer having a sulfonic acid (salt) group and an ethylenically unsaturated hydrocarbon group. Examples thereof include 3-(meth)allyloxy-2-hydroxypropanesulfonic acid, 2-(meth)allyloxyethylenesulfonic acid, 2-acrylamido-2-methylpropanesulfonic acid, p-styrenesulfonic acid, α-methyl-p-styrenesulfonic acid, vinylsulfonic acid, vinylsulfamic acid, (meth)allyl sulfonic acid, isoprene sulfonic acid, 4-(allyloxy) benzenesulfonic acid, 1-methyl-2-propene-1-sulfonic acid, 1,1-dimethyl-2-propene-1-sulfonic acid, 3-butene-1-sulfonic acid, 1-butene-3-sulfonic acid, 2-acrylamido-1-methylpropanesulfonic acid, 2-acrylamidopropanesulfonic acid, 2-acrylamido-n-butanesulfonic acid, 2-acrylamido-2-phenylpropanesulfonic acid, 2-((meth)acryloyloxy)ethanesulfonic acid, and 2-(meth)allyloxyethylenesulfonic acid.

The monomer having a sulfonic acid group and an aromatic group includes one or more monomers selected from a benzene compound having a sulfonic acid group and optionally a substituent different from a sulfonic acid group, and a naphthalene compound having a sulfonic acid group and optionally a substituent different from a sulfonic acid group. A benzene compound having a sulfonic acid group and optionally a substituent different from a sulfonic acid group is preferred. Specifically, the monomer includes one or more monomers selected from benzenesulfonic acid, phenolsulfonic acid, naphthalenesulfonic acid, an alkyl naphthalenesulfonic acid, naphtholsulfonic acid, and isomers thereof. Of these, one or more monomers selected from benzenesulfonic acid and phenolsulfonic acid are preferred, with phenolsulfonic

acid being more preferred.

Examples of the water-soluble polymer having a hydroxy group include polyvinyl alcohol and modified products thereof; hydroxyethyl(meth)acrylic water-soluble polymers; and hydroxypropyl(meth)acrylic water-soluble polymers.

Preferably, the water-soluble polymer further has a (poly)oxyalkylene group in addition to at least one functional group selected from a carboxyl group, a phosphoric acid group, a sulfonic acid group, salts of these, a phosphate ester group, and a hydroxy group.

When the water-soluble polymer has these groups, the dispersibility of the aluminosilicate can be further enhanced, the pozzolanic reaction can be further accelerated, and the early strength development can be further enhanced.

The (poly)oxyalkylene group is an alkylene oxide adduct, and examples of the alkylene oxide include C2-C8 alkylene oxides such as ethylene oxide, propylene oxide, butylene oxide, isobutylene oxide, 1-butene oxide, 2-butene oxide, and styrene oxide. Of these, C2-C4 alkylene oxides such as ethylene oxide, propylene oxide, and butylene oxide are more preferred, with ethylene oxide and propylene oxide being still more preferred.

When the (poly)oxyalkylene group is an oxyalkylene adduct with two or more types of alkylene oxides selected from oxides such as ethylene oxide, propylene oxide, butylene oxide, and styrene oxide, the alkylene oxides may be added in any form such as random addition, block addition, or alternating addition. In order to ensure a balance between hydrophilicity and hydrophobicity, the oxyalkylene groups in the (poly)alkylene glycol preferably include an oxyethylene group as an essential component. More preferably, 50 mol% or more of the oxyalkylene groups are oxyethylene groups, and still more preferably, 90 mol% or more of the oxyalkylene groups are oxyethylene groups.

The average number of moles of oxyalkylene groups added (n) is preferably 1 to 500. As the average number of moles added increases, the hydrophilicity of the resulting polymer tends to be higher and the dispersibility tends to be higher. When the average number of moles added is not more than 500, a decrease in copolymerizability can be prevented. The average number of moles added (n) is preferably 2 to 400, more preferably 5 to 300, still more preferably 10 to 200, further more preferably 15 to 150, particularly preferably 20 to 100, most preferably 30 to 80.

When the water-soluble polymer has a (poly)oxyalkylene group, it is preferably a polymer having a structural unit derived from a (poly)oxyalkylene group-containing monomer.

Non-limiting examples of the (poly)oxyalkylene group-containing monomer include a compound represented by the following formula (5):

[Chem. 3]

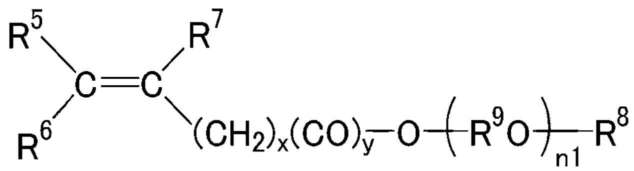

(5)

(wherein $R^5$, $R^6$, and $R^7$ are the same as or different from each other and each represent a hydrogen atom or a methyl group; $R^8$ is a hydrogen atom or a C1-C30 hydrocarbon group; ($R^9O$)s are the same as or different from each other and each represent an oxyalkylene group; n1 represents the average number of moles of oxyalkylene groups added and is a number of 1 to 500; x represents a number of 0 to 2; and y represents 0 or 1) and a monomer having a (poly)alkylene glycol chain and an aromatic group and/or a heterocyclic aromatic group (hereinafter also referred to as an aromatic group-containing (poly)alkylene glycol monomer).

In the formula (5), the preferred form of the oxyalkylene group represented by ($R^9O$) is as described above, and the preferred range of n1 is the same as that for n described above.

In the formula (5), $R^5$, $R^6$, and $R^7$ are the same as or different from each other and each represent a hydrogen atom or a methyl group. Preferably, $R^5$ and $R^6$ represent hydrogen atoms, and $R^7$ represents a hydrogen atom or a methyl group.

In the formula (5), it suffices that $R^8$ is a hydrogen atom or a C1-C30 hydrocarbon group. The C1-C30 hydrocarbon group is preferably free from radically polymerizable unsaturated bond, and is suitably a C1-C30 alkyl group (an aliphatic alkyl group or an alicyclic alkyl group) or an aromatic group having a benzene ring, such as a C6-C30 phenyl group, an alkylphenyl group, a phenylalkyl group, a phenyl group substituted with an (alkyl)phenyl group, or a naphthyl group. Since the greater the number of carbon atoms in the hydrocarbon group, the higher the hydrophobicity and the lower the dispersibility, the number of carbon atoms of the hydrocarbon group for $R^5$ is preferably 1 to 22, more preferably 1 to 18, still more preferably 1 to 12, particularly preferably 1 to 4. $R^5$ is most preferably a hydrogen atom or a C1-C4 hydrocarbon group.

In the formula (5), x represents a number of 0 to 2, and y represents 0 or 1. When y is 0, the compound represented by the formula (5) is an ether monomer, and in this case, x is preferably 2. In this case, $R^7$ is more preferably a methyl group.

When y is 1, the compound represented by the formula (5) is an ester monomer, and in this case, x is preferably 0. In this case, $R^7$ is more preferably a hydrogen atom or a methyl group, still more preferably a methyl group.

Examples of a compound represented by the formula (5) in which y is 0 and $R^8$ is a hydrogen atom include (poly)ethylene glycol allyl ether, (poly)ethylene glycol methallyl ether, (poly)ethylene glycol 3-methyl-3-butenyl ether, (poly)ethylene (poly)propylene glycol allyl ether, (poly)ethylene (poly)propylene glycol methallyl ether, (poly)ethylene (poly)propylene glycol 3-methyl-3-butenyl ether, (poly)ethylene (poly)butylene glycol allyl ether, (poly)ethylene (poly)butylene glycol methallyl ether, and (poly)ethylene (poly)butylene glycol 3-methyl-3-butenyl ether.

Examples of a compound represented by the formula (5) in which y is 0 and $R^8$ is a C1-C30 hydrocarbon group include methoxy(poly)ethylene glycol allyl ether, methoxy(poly)ethylene glycol methallyl ether, methoxy(poly)ethylene glycol 3-methyl-3-butenyl ether, methoxy(poly)ethylene (poly)propylene glycol allyl ether, methoxy(poly)ethylene (poly)propylene glycol methallyl ether, methoxy(poly)ethylene (poly)propylene glycol 3-methyl-3-butenyl ether, methoxy(poly)ethylene (poly)butylene glycol allyl ether, methoxy(poly)ethylene (poly)butylene glycol methallyl ether, and methoxy(poly)ethylene (poly)butylene glycol 3-methyl-3-butenyl ether.

Examples of a compound represented by the formula (5) in which y is 1 and $R^8$ is a hydrogen atom include (poly)alkylene glycol (meth)acrylates such as hydroxyethyl (meth)acrylate, hydroxypropyl (meth)acrylate, polyethylene glycol mono(meth)acrylate, polypropylene glycol mono(meth)acrylate, polybutylene glycol mono(meth)acrylate, polyethylene glycol polypropylene glycol mono(meth)acrylate, polyethylene glycol polybutylene glycol mono(meth)acrylate, polypropylene glycol polybutylene glycol mono(meth)acrylate, and polyethylene glycol polypropylene glycol polybutylene glycol mono(meth)acrylate.

Examples of a compound represented by the formula (5) in which y is 1 and $R^8$ is a C1-C30 hydrocarbon group include alkoxy polyalkylene glycol (meth)acrylates in which the number of carbon atoms of the alkoxy group is 1 to 30, such as methoxypolyethylene glycol mono(meth)acrylate, methoxypolypropylene glycol mono(meth)acrylate, methoxypolybutylene glycol mono(meth)acrylate, methoxypolyethylene glycol polypropylene glycol mono(meth)acrylate, methoxypolyethylene glycol polybutylene glycol mono(meth)acrylate, methoxypolypropylene glycol polybutylene glycol mono(meth)acrylate, methoxypolyethylene glycol polypropylene glycol polybutylene glycol mono(meth)acrylate, ethoxy polyethylene glycol mono(meth)acrylate, ethoxy polypropylene glycol mono(meth)acrylate, ethoxy polybutylene glycol mono(meth)acrylate, ethoxy polyethylene glycol polypropylene glycol mono(meth)acrylate, ethoxy polyethylene glycol polybutylene glycol mono(meth)acrylate, ethoxy polypropylene glycol polybutylene glycol mono(meth)acrylate, and ethoxy polyethylene glycol polypropylene glycol polybutylene glycol mono(meth)acrylate.

Preferably, the compound represented by the formula (5) is (poly)ethylene glycol methallyl ether, (poly)ethylene glycol 3-methyl-3-butenyl ether, or methoxypolyethylene glycol mono(meth)acrylate.

Examples of the aromatic group-containing (poly)alkylene glycol monomer include the above-mentioned aromatic alcohols and compounds obtained by adding an alkylene oxide to an aromatic amine such as aniline. Preferably, the aromatic group-containing (poly)alkylene glycol monomer is a compound obtained by adding an alkylene oxide to an aromatic alcohol such as phenol, cresol, resorcinol, catechol, hydroquinone, naphthol, or furfuryl alcohol.

A structural unit derived from the aromatic group-containing (poly)alkylene glycol monomer is preferably a structural unit represented by the following formula (6):

[Chem. 4]

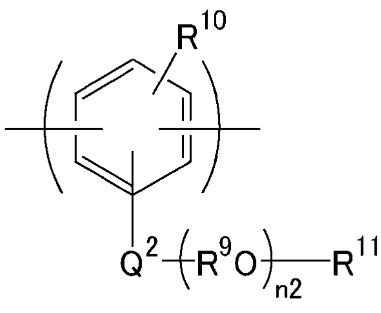

(6)

wherein $Q^2$ represents a direct bond or a divalent linking group; $R^{10}$ represents a hydrogen atom or a substituent different from a phosphate salt group and a phosphate ester group; $R^9$Os are the same as or different from each other and each represent a C2-C18 oxyalkylene group; $R^{11}$ represents a hydrogen atom or a C1-C30 hydrocarbon group; and n2 represents the average number of moles of oxyalkylene groups added and is a number of 1 to 500.

Examples of the divalent linking group for $Q^2$ include an oxygen atom, a sulfur atom, a halogen atom, -NH-, and a divalent hydrocarbon group optionally having a heteroatom. The divalent hydrocarbon group optionally having a heteroatom is the same as the divalent hydrocarbon group optionally having a heteroatom for $Q^1$ in the formula (4). $Q^2$ is preferably an oxygen atom or -NH-, more preferably an oxygen atom.

The C1-C30 hydrocarbon group for $R^{11}$ is the same as the C1-C30 hydrocarbon group for $R^8$ in the formula (5).
$R^{11}$ is preferably a hydrogen atom.
n2 is preferably 5 to 200, more preferably 10 to 150, still more preferably 12 to 120.
Preferred examples of the aromatic group-containing (poly)alkylene glycol monomer include 2-phenoxyethanol and phenoxypolyethylene glycol.
When the carboxylic acid-based water-soluble polymer has a (poly)oxyalkylene group, the polymer is preferably a polymer having a structural unit (a) derived from an unsaturated carboxylic acid-based monomer and a structural unit (b) derived from a compound represented by the formula (5) or a polymer having a structural unit derived from a monomer having a carboxyl group and an aromatic group and a structural unit derived from an aromatic group-containing (poly) alkylene glycol monomer.
When the carboxylic acid-based water-soluble polymer has a structural unit (a) derived from an unsaturated carboxylic acid-based monomer and a structural unit (b) derived from a compound represented by the formula (4), the polymer may have a structural unit (c) derived from a different monomer.
The different monomer may be any one copolymerizable with an unsaturated carboxylic acid-based monomer and a compound represented by the formula (5). Examples thereof include diesters of C1-C30 alcohols and unsaturated dicarboxylic acids such as maleic acid, maleic anhydride, fumaric acid, itaconic acid, and citraconic acid; diamides of the aforementioned unsaturated dicarboxylic acids and C1-C30 amines; diesters of the aforementioned unsaturated dicarboxylic acids and alkyl (poly)alkylene glycols that are prepared by adding 1 to 300 mol of C2-C18 alkylene oxides to the aforementioned alcohols or amines; diesters of the aforementioned unsaturated dicarboxylic acids and C2-C18 glycols or polyalkylene glycols prepared by adding 2 to 300 mol of alkylene oxides to these glycols; esters of unsaturated monocarboxylic acids and C1-C30 alcohols, such as methyl (meth)acrylate, ethyl (meth)acrylate, propyl (meth)acrylate, glycidyl (meth)acrylate, methyl crotonate, ethyl crotonate, and propyl crotonate; half amides of maleamic acid and C2-C18 glycols or polyalkylene glycols prepared by adding 2 to 300 mol of alkylene oxides to these glycols;

(poly)alkylene glycol di(meth)acrylates such as triethylene glycol di(meth)acrylate, (poly)ethylene glycol di(meth) acrylate, polypropylene glycol di(meth)acrylate, and (poly)ethylene glycol (poly)propylene glycol di(meth)acrylate; polyfunctional (meth)acrylates such as hexanediol di(meth)acrylate, trimethylolpropane tri(meth)acrylate, and trimethylolpropane di(meth)acrylate; (poly)alkylene glycol dimaleates such as triethylene glycol dimaleate and polyethylene glycol dimaleate; unsaturated sulfonic acids such as vinyl sulfonate, (meth)allyl sulfonate, 2-(meth)acryloxyethyl sulfonate, 3-(meth)acryloxypropyl sulfonate, 3-(meth)acryloxy-2-hydroxypropyl sulfonate, 3-(meth)acryloxy-2-hydroxypropyl sulfophenyl ether, 3-(meth)acryloxy-2-hydroxypropyl oxysulfobenzoate, 4-(meth)acryloxybutylsulfonate, (meth)acrylamidomethylsulfonic acid, (meth)acrylamidoethylsulfonic acid, 2-methylpropanesulfonic acid (meth)acrylamide, and styrenesulfonic acid, and monovalent metal salts, divalent metal salts, ammonium salts, and organic amine salts (organic ammonium salts) of these; amides of unsaturated monocarboxylic acids and C1-C30 amines, such as methyl(meth)acrylamide; vinyl aromatic monomers such as styrene, $\alpha$-methylstyrene, vinyltoluene, and p-methylstyrene; alkanediol mono(meth)acrylates such as 1,4-butanediol mono(meth)acrylate, 1,5-pentanediol mono(meth)acrylate, and 1,6-hexanediol mono(meth)acrylate; dienes such as butadiene, isoprene, 2-methyl-1,3-butadiene, and 2-chloro-1,3-butadiene;
unsaturated amides such as (meth)acrylamide, a (meth)acrylalkylamide, N-methylol (meth)acrylamide, and N,N-dimethyl (meth)acrylamide; unsaturated cyanides such as (meth)acrylonitrile and $\alpha$-chloroacrylonitrile; unsaturated esters such as vinyl acetate and vinyl propionate; unsaturated amines such as aminoethyl (meth)acrylate, methylaminoethyl (meth)acrylate, dimethylaminoethyl (meth)acrylate, dimethylaminopropyl (meth)acrylate, dibutylaminoethyl (meth)acrylate, and vinylpyridine; divinyl aromatic monomers such as divinylbenzene; cyanurates such as triallyl cyanurate; allyls such as (meth)allyl alcohol and glycidyl (meth)allyl ether; and siloxane derivatives such as poly(dimethylsiloxane) propylaminomaleamic acid, poly(dimethylsiloxane) aminopropylene aminomaleamic acid, poly(dimethylsiloxane)-bis(propylaminomaleamic acid), poly(dimethylsiloxane)-bis(dipropylene aminomaleamic acid), poly(dimethylsiloxane)-(1-propyl-3-acrylate), poly(dimethylsiloxane)-(1-propyl-3-methacrylate), poly(dimethylsiloxane)-bis(1-propyl-3-acrylate), and poly(dimethylsiloxane)-bis(1-propyl-3-methacrylate).

In the carboxylic acid-based water-soluble polymer, the proportion of the structural unit (a) is preferably 7 to 50% by mass in 100% by mass of all structural units. The proportion is more preferably 10 to 45% by mass, still more preferably 12 to 30% by mass.
In the carboxylic acid-based water-soluble polymer, the proportion of the structural unit (b) is preferably 50 to 93% by mass in 100% by mass of all structural units. The proportion is more preferably 55 to 90% by mass, still more preferably 70 to 88% by mass.
In the carboxylic acid-based water-soluble polymer, the proportion of the structural unit (c) is preferably 0 to 40% by mass in 100% by mass of all structural units. The proportion is more preferably 0 to 30% by mass, still more preferably 0 to 20% by mass, particularly preferably 0 to 10% by mass, most preferably 0% by mass.

Specific examples of the polymer having a structural unit derived from an unsaturated carboxylic acid-based monomer and a structural unit derived from a compound represented by the formula (5) include a copolymer of an (alkoxy) polyalkylene glycol mono(meth)acrylic acid ester monomer (a), a (meth)acrylic acid monomer (b) (95 to 2% by weight), and a different monomer (c) copolymerizable with these monomers, as described in JP H09-86990 A; a copolymer containing, as essential structural units, a structural unit (I) derived from an unsaturated polyalkylene glycol ether monomer (a) having a C5 alkenyl group and a structural unit (II) derived from an unsaturated monocarboxylic acid-based monomer (b), as described in JP 2001-220417 A; a copolymer containing, as essential structural units, a structural unit (I) derived from an unsaturated polyalkylene glycol ether monomer (a) having a C4 alkenyl group and a structural unit (II) derived from an unsaturated monocarboxylic acid-based monomer (b), as described in JP 2002-121055 A; a copolymer containing, as essential structural units, a structural unit (I) derived from an unsaturated polyalkylene glycol ether monomer (a) having a C2-C3 alkenyl group and a structural unit (II) derived from an unsaturated monocarboxylic acid-based monomer (b), as described in JP 2002-121056 A; a copolymer of an unsaturated polyalkylene glycol ether monomer (I) having a C5 alkenyl group, an unsaturated maleic acid monomer (II), and a monomer copolymerizable with these monomers, as described in JP H10-236858 A; and a copolymer containing, as essential structural units, a structural unit (A) derived from polyethylene glycol monovinyl ether, a structural unit (B) derived from an unsaturated carboxylic acid-based monomer, and a structural unit (C) derived from a (hydroxy)alkyl (meth)acrylate, as described in JP 2004-307590 A.

When the carboxylic acid-based water-soluble polymer has a structural unit derived from a monomer having a carboxyl group and an aromatic group and a structural unit derived from an aromatic group-containing (poly)alkylene glycol monomer, the polymer preferably has the structural unit derived from a monomer having a carboxyl group and an aromatic group and a structural unit represented by the formula (6).

In this case, the structural unit derived from a monomer having a carboxyl group and an aromatic group and the structural unit represented by the formula (6) are preferably present in a molar ratio (former structural unit/latter structural unit) of 0.1 to 9. More preferably, the molar ratio is 0.25 to 4.

When the carboxylic acid-based water-soluble polymer has a structural unit derived from a monomer having a carboxyl group and an aromatic group and a structural unit derived from an aromatic group-containing (poly)alkylene glycol monomer, the polymer may have a structural unit different from both the structural unit derived from a monomer having a carboxyl group and an aromatic group and the structural unit derived from an aromatic group-containing (poly) alkylene glycol monomer. Examples of the different structural unit include the structural unit derived from a monomer having a sulfonic acid group and an aromatic group, the structural unit derived from a monomer having a phosphoric acid (salt) group and/or a phosphate ester group and an aromatic group, and a structural unit derived from a different monomer having an aromatic group, which is described below. The proportion of the structural unit different from both the structural unit derived from a monomer having a carboxyl group and an aromatic group and the structural unit represented by the formula (6) is preferably, but not limited to, 0 to 50 mol% in 100 mol% in total of the structural unit derived from a monomer having a carboxyl group and an aromatic group and the structural unit represented by the formula (6). The proportion is more preferably 0 to 40 mol%, still more preferably 0 to 30 mol%, most preferably 0 mol%.

When the phosphoric acid-based water-soluble polymer has a (poly)oxyalkylene group, it preferably has a structural unit represented by the formula (4) and a structural unit represented by the formula (6).

In this case, the molar ratio of the structural unit represented by the formula (4) to the structural unit represented by the formula (6) (formula (4)/formula (6)) is preferably 0.3 to 4. The molar ratio is more preferably 0.4 to 3.5, still more preferably 0.45 to 3.

The phosphoric acid-based water-soluble polymer may have a structural unit different from both the structural unit having a phosphoric acid (salt) group and/or a phosphate ester group and the structural unit having a (poly)alkylene glycol chain. Examples of the different structural unit include the structural unit derived from a monomer having a sulfonic acid group and an aromatic group and a structural unit derived from a different monomer having an aromatic group, which is described below.

Examples of the different monomer having an aromatic group include phenoxy alcohol, phenol, naphthol, aniline, benzene-1,2-diol, benzene-1,2,3-triol, 1,2-dihydroxynaphthalene, and 2,3-dihydroxynaphthalene, which are reactive with an aldehyde compound described below.

The proportion of the structural unit different from both the structural unit having a phosphoric acid (salt) group and/or a phosphate ester group and the structural unit having a (poly)alkylene glycol chain is preferably, but not limited to, 0 to 50 mol% in 100 mol% in total of the structural unit having a phosphoric acid (salt) group and/or a phosphate ester group and the structural unit having a (poly)alkylene glycol chain. The proportion is more preferably 0 to 40 mol%, still more preferably 0 to 30 mol%, most preferably 0 mol%.

In the polymer having a structural unit derived from a monomer having an aromatic group, the structural units are preferably bonded via a divalent linking group derived from an aldehyde compound.

Examples of the aldehyde compound include formaldehyde; compounds having a C1-C5 alkyl group and an aldehyde group, such as acetaldehyde, propionaldehyde, and butanal; glyoxylic acid, benzaldehyde, and paraformaldehyde. Of these, formaldehyde, benzaldehyde, and paraformaldehyde are preferred, with formaldehyde being most

preferred.

For example, the structure in which the structural unit represented by the formula (4) and the structural unit represented by the formula (6) are bonded via a divalent linking group derived from an aldehyde compound is represented by the following formula (7):

[Chem. 5]

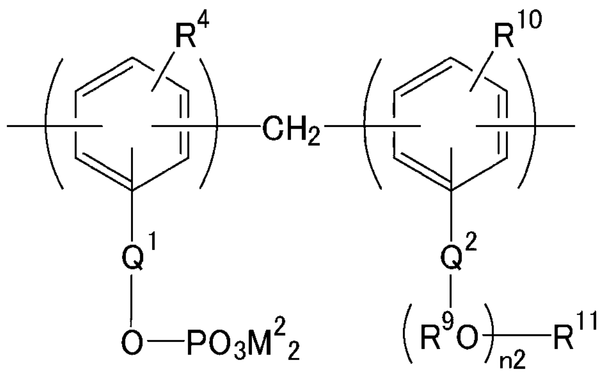

(7)

wherein $M^2$s are the same as or different from each other and each represent a hydrogen atom, a monovalent metal atom, a divalent metal atom, a trivalent metal atom, an organic amine group, or a hydrocarbon group optionally having a substituent; $Q^1$ and $Q^2$ are the same as or different from each other and each represent a direct bond or a divalent linking group; $R^4$ and $R^{10}$ are the same as or different from each other and each represent a hydrogen atom or a substituent different from a phosphate salt group and a phosphate ester group; $R^9O$s are the same as or different from each other and each represent a C2-C18 oxyalkylene group; $R^{11}$ represents a hydrogen atom or a C1-C30 hydrocarbon group; and n2 represents the average number of moles of oxyalkylene groups added and is a number of 1 to 500.

In the polymer having a structural unit derived from a monomer having an aromatic group, such as the above-mentioned phosphoric acid-based water-soluble polymer, the structural units derived from the respective monomers are preferably bonded via a methylene group.

Specific examples of the phosphoric acid-based water-soluble polymer having a structural unit derived from a monomer having an aromatic group include polycondensation products containing the following components C1, C3, and optionally C2, as described in JP 2008-517080 A.

(Component C1)

An aromatic compound or heteroaromatic compound containing 5 to 10 carbon atoms or a heteroatom and containing, on average, 1 to 300 mol of oxyethylene and/or oxypropylene groups per molecule, the groups bonded to the aromatic compound or heteroaromatic compound via an oxygen atom or a nitrogen atom

(Component C2)

At least one aromatic compound, as an optional component, selected from the group consisting of (C2-1) phenol, (C2-2) phenol ether, (C2-3) naphthol, (C2-4) naphthol ether, (C2-5) aniline, (C2-6) furfuryl alcohol, and an aminoplast forming agent selected from the group consisting of (C2-7) melamine, a derivative thereof, urea, a derivative thereof, and carboxamide

(Component C3)

An aldehyde selected from the group consisting of formaldehyde, glyoxylic acid, benzaldehyde, and mixtures thereof, where the benzaldehyde may further contain acidic groups represented by the formulas COOMa, $SO_3Ma$, and $PO_3Ma$, where M is H, an alkali metal, an alkaline earth metal, ammonium, or an organic amine group, and "a" may be 1/2, 1, or 2.

The phosphoric acid-based water-soluble polymer may not contain an aromatic group in the structure. Examples of the polymer having such a structure include those having a structural unit derived from a monomer represented by the following formula (8) and/or (9), as a phosphoric acid group-containing monomer:

[Chem. 6]

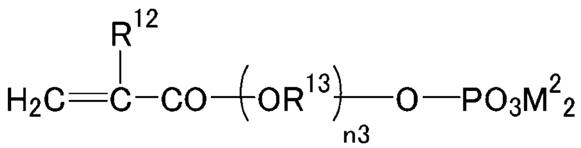

(8)

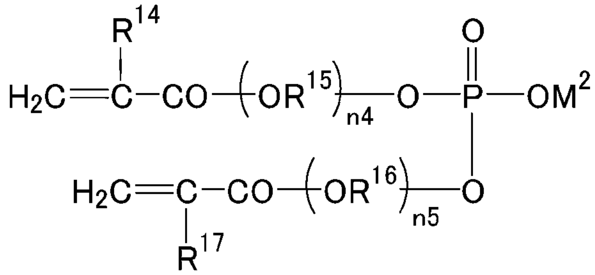

(9)

wherein $R^{12}$, $R^{14}$, and $R^{17}$ are the same as or different from each other and each represent a hydrogen atom or a methyl group; $OR^{13}$, $OR^{15}$, and $OR^{16}$ are the same as or different from each other and each represent a C2-C18 oxyalkylene group; $n^3$, $n^4$, and $n^5$ are the same as or different from each other and each represent a number of 1 to 30; and $M^2$ is the same as $M^2$ in the formula (7).

An example of the phosphoric acid-based water-soluble polymer not containing an aromatic group in the structure is a polymer having a structural unit derived from a monomer represented by the formula (8) and/or (9) and a structural unit derived from a compound represented by the formula (5). A specific example thereof is a copolymer of an (alkoxy)polyalkylene glycol mono(meth)acrylic acid ester monomer and a phosphate ester monomer as described in JP 2006-052381 A.

The water-soluble polymer is preferably a carboxylic acid-based water-soluble polymer, a phosphoric acid-based water-soluble polymer, or a sulfonic acid-based water-soluble polymer.

The carboxylic acid-based water-soluble polymer is more preferably a (poly)ethylene glycol methallyl ether/-acrylic acid copolymer, a (poly)ethylene glycol-3-methyl-3-butenyl ether/acrylic acid copolymer, or a methoxypolyethylene glycol mono(meth)acrylate/(meth)acrylic acid copolymer.

The phosphoric acid-based water-soluble polymer is more preferably a polymer having a structure represented by the formula (7).

The sulfonic acid-based water-soluble polymer is more preferably a naphthalenesulfonic acid formaldehyde condensate, a melaminesulfonic acid formaldehyde condensate, a ligninsulfonic acid, or a polystyrene sulfonate, for example.

The water-soluble polymer may be produced by any method and can be produced by polymerizing monomer components by commonly used methods.

The aluminosilicate-containing composition of the present invention may contain a component different from the aluminosilicate, the water-soluble polymer, the aluminum-containing compound, and the silicon-containing compound.

Non-limiting examples of the different component include an antifoaming agent, an AE agent, and a surfactant.

The amount of the different component is preferably, but not limited to, 0 to 20% by mass relative to 100% by mass of the aluminosilicate-containing composition. The amount is more preferably 0 to 10% by mass, still more preferably 0 to 5% by mass, particularly preferably 0 to 1% by mass.

The surfactant may include one or more selected from an anionic surfactant, a cationic surfactant, a nonionic surfactant, an amphoteric surfactant, and a polymer surfactant.

Non-limiting examples of the anionic surfactant include polyoxyalkylene alkyl ether sulfate ester salts, polyoxyalkylene oleyl ether sodium sulfate salts, polyoxyalkylene alkyl phenyl ether sulfate ester salts, alkyl diphenyl ether disulfonate salts, polyoxyalkylene (mono-, di-, tri-)styryl phenyl ether sulfate ester salts, polyoxyalkylene (mono-, di-, tri-) benzyl phenyl ether sulfate ester salts, alkenyl succinic acid disalts; alkyl sulfate salts such as sodium dodecyl sulfate, potassium dodecyl sulfate, and ammonium alkyl sulfates; sodium dodecyl polyglycol ether sulfate; sodium sulforicinoleate; alkylsulfonates such as sulfonated paraffin salts; alkyl sulfonates such as sodium dodecylbenzene sulfonate and alkali metal sulfates of alkali phenol hydroxyethylene; high alkyl naphthalene sulfonates; naphthalene sulfonic acid formalin condensates; fatty acid salts such as sodium laurate, triethanolamine oleate, and triethanolamine abietate; polyoxyalkyl ether sulfate ester salts; polyoxyethylene carboxylic acid ester sulfate ester salts; polyoxyethylene phenyl ether sulfate ester salts; succinic acid dialkyl ester sulfonates; and polyoxyethylene alkylaryl sulfate salts. These may be used alone or in combination of two or more.

Examples of commercial products suitable as the anionic surfactant include LATEMUL WX, LATEMUL 118B, PELEX SS-H, EMULGEN A-60, B-66, and LEVENOL WZ (Kao Corporation), NEWCOL 707SF, NEWCOL 707SN, NEWCOL 714SF, NEWCOL 714SN, AB-26S, ABEX-2010, 2020, 2030, and DSB (Rhodia Nicca, Ltd.).

Nonionic surfactants corresponding to these can also be used.

The anionic surfactant as a reactive surfactant may be one or more selected from reactive surfactants such as reactive anionic surfactants, sulfosuccinate reactive anionic surfactants, and alkenylsuccinate reactive anionic surfactants.

Examples of commercial sulfosuccinate reactive anionic surfactants include LATEMUL S-120, S-120A, S-180, and S-180A (all trade names, available from Kao Corporation), ELEMINOL JS-2 (trade name, available from Sanyo Chemical Industries, Ltd.), and ADEKA REASOAP SR-10, SR-20, and SR-30 (ADEKA Corporation).

Examples of commercial alkenylsuccinate reactive anionic surfactants include LATEMUL ASK (trade name, available from Kao Corporation).

Examples thereof further include: sulfate esters (salts) having an allyl group, such as (meth)acrylic acid polyoxyethylene sulfonate salts (e.g., "ELEMINOL RS-30", available from Sanyo Chemical Industries, Ltd., and "ANTOX MS-60", available from Nippon Nyukazai Co., Ltd.) and sulfonate salts of allyloxymethylalkyloxypolyoxyethylene (e.g., "AQUALON KH-10", available from DKS Co. Ltd.); polyoxyalkylene alkenyl ether ammonium sulfates (e.g., "LATEMUL PD-104", available from Kao Corporation); and aromatic hydrocarbon compounds having a 1-propenyl group, a polyoxyethylene group, and an ammonium sulfate group (e.g., "AQUALON BC-10", available from DKS Co. Ltd.).

The anionic surfactant may be a reactive surfactant selected from the following surfactants:
sulfoalkyl (C1-C4) ester salt-type surfactants of C3-C5 aliphatic unsaturated carboxylic acids, such as (meth)acrylic acid sulfoalkyl ester salt surfactants (e.g., sodium 2-sulfoethyl (meth)acrylate and ammonium 3-sulfopropyl (meth)acrylate) and aliphatic unsaturated dicarboxylic acid alkyl sulfoalkyl diester salt surfactants (e.g., a sodium salt of an alkyl ester of sulfopropyl maleic acid, an ammonium salt of a polyoxyethylene alkyl ester of sulfopropyl maleic acid, and an ammonium salt of a polyoxyethylene alkyl ester of sulfoethyl fumaric acid).

Non-limiting examples of the nonionic surfactant include polyoxyethylene alkyl ethers; polyoxyethylene alkylaryl ethers; sorbitan aliphatic esters; polyoxyethylene sorbitan aliphatic esters; aliphatic monoglycerides such as glycerol monolaurate; polyoxyethylene oxypropylene copolymers; condensation products of ethylene oxide and aliphatic amines, amides, or acids, triisopropanolamine, and Jeffamines. The nonionic surfactant may also be a reactive nonionic surfactant such as allyloxymethylalkoxyethylhydroxypolyoxyethylene (e.g., ADEKA REASOAP ER-20 available from ADEKA CORPORATION), polyoxyalkylene alkenyl ether (e.g., LATEMUL PD-420 and LATEMUL PD-430, available from Kao Corporation), or an aromatic compound having a 1-propenyl group and a polyoxyethylene group (e.g., AQUALON RN-20, available from DKS Co. Ltd.). These may be used alone or in combination of two or more.

Non-limiting examples of the cationic surfactant include dialkyl dimethyl ammonium salts, ester-type dialkyl ammonium salts, amide-type dialkyl ammonium salts, and dialkylimidazolinium salts. These may be used alone or in combination of two or more.

Non-limiting examples of the amphoteric surfactant include alkyldimethylaminoacetic acid betaine, alkyldimethylamine oxide, alkylcarboxymethyl hydroxyethyl imidazolinium betaine, alkylamide propylbetaine, and alkylhydroxysulfobetaine. These may be used alone or in combination of two or more.

Non-limiting examples of the polymer surfactant include nonionic polymer surfactants such as polyvinylpyrrolidone and poly-N-vinylacetamide. These may be used alone or in combination of two or more.

Of these surfactants, from an environmental standpoint, a non-nonylphenyl type surfactant is preferred.

<Method for producing aluminosilicate-containing composition>

The aluminosilicate-containing composition of the present invention may be produced by any method and is preferably produced by reacting an aluminum-containing compound with a silicon-containing compound in the presence of a water-soluble polymer.

The present invention also relates to a method for producing an aluminosilicate-containing composition. The method includes a step ($\alpha$) of reacting an aluminum-containing compound with a silicon-containing compound in the presence of a water-soluble polymer.

Specific examples and preferred forms of the water-soluble polymer, the aluminum-containing compound, and the silicon-containing compound are as described above.

The step ($\alpha$) may be any step including reacting an aluminum-containing compound with a silicon-containing compound in the presence of a water-soluble polymer. Preferably, the step ($\alpha$) is performed in water with stirring.

This allows the average particle size of the resulting aluminosilicate to fall within a more suitable range.

In the step ($\alpha$), the raw materials may be added by any method. Preferably, aqueous solutions of the water-soluble polymer, the aluminum-containing compound, and the silicon-containing compound are mixed.

In the step ($\alpha$), these compounds may be added all at once or successively. Preferably, an aqueous solution containing one or two components selected from the water-soluble polymer, the aluminum-containing compound, and the silicon-containing compound is prepared, and the remaining component(s) is added dropwise thereto.

More preferably, an aqueous solution containing the aluminum-containing compound and an aqueous solution containing the silicon-containing compound are added dropwise to an aqueous solution containing the water-soluble polymer.

To allow the aluminosilicate-containing composition to contain at least one of an amine having a molecular weight of not more than 1,000 or a metal compound, the amine and/or the metal compound is preferably added in the step ($\alpha$).

In the step ($\alpha$), the amine and/or the metal compound may be added by any method. When the amine is added, an aqueous solution containing the aluminum-containing compound and an aqueous solution of the silicon-containing compound are preferably added dropwise to an aqueous solution containing the water-soluble polymer and the amine.

In the step ($\alpha$), when the metal compound is added, an aqueous solution containing the aluminum-containing compound, an aqueous solution containing the silicon-containing compound, and an aqueous solution containing the metal compound are preferably added dropwise to an aqueous solution containing the water-soluble polymer.

In the step ($\alpha$), the water-soluble polymer is preferably used in an amount of 5 to 1,000% by mass relative to 100% by mass in total of the aluminum-containing compound and the silicon-containing compound. The amount is more preferably 10 to 500% by mass, still more preferably 10 to 75% by mass, particularly preferably 20 to 50% by mass.

The amount of silicon atoms in the raw materials used in the step ($\alpha$) is preferably 1 to 1,000 mol% relative to 100 mol% of aluminum atoms. The amount is more preferably 10 to 800 mol%, still more preferably 50 to 500 mol%, particularly preferably 50 to 300 mol%.

When the amine having a molecular weight of not more than 1,000 is used in the step ($\alpha$), the amount thereof is preferably 0.01 to 500% by mass relative to 100% by mass of the aluminosilicate to be produced. The amount is more preferably 1 to 100% by mass, still more preferably 5 to 70% by mass, particularly preferably 10 to 50% by mass.

When the metal compound is used in the step ($\alpha$), the amount thereof is preferably 0.001 to 50 mol% relative to 100 mol% in total of the aluminum element and the silicon element in the aluminum-containing compound and the silicon-containing compound used in the step ($\alpha$), respectively. The amount is more preferably 0.01 to 50 mol%, still more preferably 0.1 to 50 mol%, particularly preferably 1 to 50 mol%.

The reaction temperature in the step ($\alpha$) is preferably, but not limited to, 10°C to 90°C, more preferably 20°C to 80°C.

<Hardening accelerator composition>

The aluminosilicate-containing composition of the present invention can be added as a hardening accelerator to hydraulic material compositions including cement paste, mortar, and concrete. The aluminosilicate-containing composition can also be used in ultra-high strength concrete.

The present invention also relates to a hardening accelerator composition containing an aluminosilicate, a water-soluble polymer, and at least one of an amine having a molecular weight of not more than 1,000 or a metal compound.

The present invention also relates to a hardening accelerator composition which contains an aluminosilicate and a water-soluble polymer and is for use in a hydraulic material composition containing at least one selected from the group consisting of a filler and a substance having at least one of latent hydraulicity or pozzolanic activity.

Preferred forms of the aluminosilicate, the water-soluble polymer, the amine having a molecular weight of not more than 1,000, and the metal compound in the hardening accelerator composition are as described above.

The present invention also relates to a method for accelerating hardening of a hydraulic material, including

adding the above-mentioned aluminosilicate-containing composition to a hydraulic material and hardening the composition obtained in the adding step.

Preferred modes of the adding step and the hardening step in the hardening acceleration method are the same as those of the adding step (β) in a method for producing a hydraulic material composition and the hardening step (γ) in a method for producing a hydraulically hardened product, respectively, which are described later.

The hardening accelerator composition may contain an aluminum-containing compound and/or a silicon-containing compound, and any of the different components described above. Specific examples and preferred forms thereof are as described above.

The preferred ranges of the amounts of the aluminosilicate, water-soluble polymer, amine having a molecular weight of not more than 1,000, metal compound, and a different component in the hardening accelerator composition are the same as the preferred ranges of the amounts of the corresponding components in the aluminosilicate-containing composition.

<Hydraulic material composition>

The present invention also relates to a hydraulic material composition containing the aluminosilicate-containing composition and/or the hardening accelerator composition of the present invention and a hydraulic material.

The hydraulic material composition is suitably a commonly used one containing components such as cement, water, fine aggregate, and coarse aggregate. The hydraulic material composition may also contain fine powders such as fly ash, blast furnace slag, silica fume, and limestone.

Ultra-high strength concrete is a general term commonly used in the field of cement compositions, and specifically refers to concrete that achieves equal or greater strength of its hardened product than conventional concrete, even with a lower water/cement ratio. For example, ultra-high strength concrete is concrete having workability that does not interfere with normal use even when the water/cement ratio is not higher than 25% by mass, even not higher than 20% by mass, particularly not higher than 18% by mass, particularly not higher than 14% by mass, or particularly about 12% by mass. The hardened product thereof has a compressive strength of not less than 60 $N/mm^2$, preferably not less than 80 $N/mm^2$, more preferably not less than 100 $N/mm^2$, particularly preferably not less than 120 $N/mm^2$, particularly preferably not less than 160 $N/mm^2$, particularly preferably not less than 200 $N/mm^2$.

The hydraulic material composition may further contain a different commonly used cement dispersant or a different commonly used water reducing agent, and two or more of these may be used in combination. Non-limiting examples of the different cement dispersant (water reducing agent) include the above-mentioned water-soluble polymer compounds. Of these, a carboxylic acid-based water-soluble polymer, a phosphoric acid-based water-soluble polymer, and a sulfonic acid-based water-soluble polymer are preferred.

These cement dispersants may be used alone or in combination of two or more.

The hydraulic material composition of the present invention may optionally contain a different additive. Examples of the different additive include water-soluble polymeric substances, polymer emulsions, retarders, early strength agents/accelerators, antifoaming agents, AE agents, other surfactants, waterproofing agents, rust inhibitors, expanding agents, cement wetting agents, thickeners, separation reducing agents, flocculants, drying shrinkage reducing agents, strength enhancing agents, self-leveling agents, colorants, and antifungal agents. One or more of these may be used.

When the cement dispersant is used in combination with the different additive, the mass ratio between the different additive and the cement dispersant, which cannot be uniquely determined due to differences in the type, amount, and test conditions of the cement dispersant used, is preferably 5 to 95:95 to 5, more preferably 10 to 90:90 to 10.

The hydraulic material composition can be used in various hydraulic materials, specifically, cement compositions such as cement and gypsum and other hydraulic materials. Specific examples of hydraulic compositions containing any of these hydraulic materials, water, and optionally fine aggregates (e.g., sand) or coarse aggregates (e.g., crushed stone) include cement paste, mortar, concrete, and plaster. Of these hydraulic compositions, a cement composition containing cement as a hydraulic material is preferred, and the present invention also encompasses a cement composition containing the aluminosilicate-containing composition and/or the hardening accelerator composition and cement.

Examples of the cement in the hydraulic material composition include Portland cements (ordinary, high early strength, ultra high early strength, moderate heat, sulfateresistant, and low alkaline types thereof); various types of blended cements (blast furnace cement, silica cement, and fly ash cement); white Portland cement; alumina cement; ultra-rapid hardening cements (1-clinker rapid hardening cement, 2-clinker rapid hardening cement, and magnesium phosphate cement); grout cement; oil well cement; low heat cements (low heat blast furnace cement, fly ash-blended low heat blast furnace cement, and belite-rich cement); ultra-high strength cement; cement-based solidifying materials; and ecocement (cement produced from one or more of municipal solid waste incineration ash and sewage sludge incineration ash as raw materials). The hydraulic material composition of the present invention may contain only one type of cement, or two or more types of cement.

The hydraulic material composition preferably contains, in addition to cement, at least one selected from the

group consisting of a filler and a substance having at least one of latent hydraulicity or pozzolanic activity.

Typically, SCM concrete has a longer hardening time than ordinary Portland cement and has a problem with early strength development. The aluminosilicate-containing composition of the present invention also has excellent ability to enhance early strength development of SCM concrete. Thus, the technical significance of the present invention is further exhibited when the hydraulic material composition contains at least one selected from the group consisting of a filler and a substance having at least one of latent hydraulicity or pozzolanic activity.

The total amount of the filler and the substance having at least one of latent hydraulicity or pozzolanic activity in the hydraulic material composition is preferably, but not limited to, 0.1 to 10,000% by mass relative to 100% by mass of the cement. The total amount is more preferably 0.1 to 900% by mass, still more preferably 5 to 800% by mass, further more preferably 10 to 500% by mass, still further more preferably 20 to 300% by mass, particularly preferably 30 to 200% by mass.

Examples of the aggregates include gravel, crushed stone, granulated blast furnace slag, recycled aggregates, as well as siliceous, clay, zircon, high-alumina, silicon carbide, graphite, chromite, chrome-magnesia, or magnesia refractory aggregates.

The water content per $m^3$ of the hydraulic material composition, the amount of cement used in the hydraulic material composition, and the water/cement ratio of the hydraulic material composition are not limited. For example, preferably, the water content is 100 to 185 $kg/m^3$, the amount of cement used is 250 to 800 $kg/m^3$, and the water/cement ratio (by weight) is 0.12 to 0.74. More preferably, the water content is 120 to 175 $kg/m^3$, the amount of cement used is 270 to 800 $kg/m^3$, and the water/cement ratio (by weight) is 0.15 to 0.65. Thus, the hydraulic material composition of the present invention can be used in a wide variety of concretes from lean mix concrete to rich mix concrete, and is effective for both high strength concrete having a high unit cement content and lean mix concrete having a unit cement content of not more than 300 $kg/m^3$. The hydraulic material composition of the present invention can be favorably used in a region with a relatively high water-reduction rate, that is, a region with a low water/cement ratio (a water/cement ratio (by weight) = 0.15 to 0.5, preferably 0.15 to 0.4).

The amount of the aluminosilicate-containing composition and/or the hardening accelerator composition of the present invention in the hydraulic material composition is preferably, but not limited to, 0.1 to 10% by mass relative to 100% by mass in total of the cement, the substance having at least one of latent hydraulicity or pozzolanic activity, and the filler. The amount is more preferably 0.2 to 5% by mass, still more preferably 0.2 to 3% by mass.

The amount of the aluminosilicate in the hydraulic material composition is preferably set to, for example, 0.01 to 1% by mass in terms of solids relative to 100% by mass in total of the cement. If the amount of the aluminosilicate is lower than 0.01% by mass, the performance may be insufficient, whereas if the amount is higher than 1% by mass, the effect may substantially reach a plateau, leading to a cost disadvantage. The amount is more preferably 0.05 to 0.5% by mass, still more preferably 0.1 to 0.4% by mass. Herein, the amount of solids can be measured as follows.

Herein, the amount of solids can be measured as follows.

<Method for measuring amount of solids>

1. An aluminum dish is precisely weighed.
2. A sample for measuring the amount of solids is precisely weighed on the aluminum dish that has been precisely weighed in Step 1.
3. The sample that has been precisely weighed in Step 2 is placed in a dryer whose temperature has been controlled to 130°C in a nitrogen atmosphere and allowed to stand for one hour.
4. After one hour, the sample is removed from the dryer and allowed to cool in a desiccator at room temperature for 15 minutes.
5. After 15 minutes, the sample is removed from the desiccator, and the total mass of the aluminum dish and the sample is precisely weighed.
6. The mass of the aluminum dish obtained in Step 1 is subtracted from the mass obtained in Step 5, and the obtained value is divided by the mass of the sample obtained in Step 2 to determine the amount of solids.

The hydraulic material composition obtained using the aluminosilicate-containing composition and/or the hardening accelerator composition of the present invention exhibits excellent early strength development and can be effectively applied to precast cement (precast concrete). In a preferred embodiment of the present invention, the hydraulic material composition of the present invention is used in precast cement.

The aluminosilicate-containing composition and/or the hardening accelerator composition of the present invention also has excellent ability to enhance early strength development when SCM such as fly ash or slag is used, and thus can be effectively applied to SCM concrete.

The hydraulic material composition of the present invention may be produced by any method and is preferably produced by adding the aluminosilicate-containing composition of the present invention or the aluminosilicate-containing composition obtained by the above-mentioned production method to a hydraulic material.

The present invention also relates to a method for producing a hydraulic material composition, the method including a step (β) of adding the aluminosilicate-containing composition of the present invention or the aluminosilicate-containing composition obtained by the above-mentioned production method to a hydraulic material.

The step (β) of adding the aluminosilicate-containing composition may be performed by any method. Preferably, a dispersion of the aluminosilicate-containing composition in a solvent such as water is added.

The present invention also relates to a method for producing a hydraulically hardened product, the method including a step (γ) of hardening the hydraulic material composition of the present invention or the hydraulic material composition obtained by the above-mentioned production method.

The hardening step (γ) may be performed by any method and may be performed by room temperature curing or steam curing.

The hardening step (γ) is preferably a step of hardening the hydraulic material composition at -20°C to 90°C. The hardening temperature is preferably 5°C to 85°C, more preferably 5°C to 80°C, still more preferably 5°C to 75°C, particularly preferably 5°C to 40°C.

In the method for producing a hydraulically hardened product, the hardening step (γ) is preferably performed at a humidity of 40% to 100%. The humidity is more preferably 50% to 100%, still more preferably 60% to 100%.

The hardening step (γ) may be performed in one stage or in two or more stages, and is preferably performed in two stages. Preferably, the first stage is performed at a temperature of 15°C to 30°C and a humidity of 40% to 60%, and the second stage is performed at a temperature of 40°C to 90°C and a humidity of 60% to 100%.

The method for producing a hydraulically hardened product preferably includes pouring the hydraulic material composition into a mold, and the hardening step (γ) is preferably performed after the step of pouring the composition into the mold.

In the method for producing a hydraulically hardened product, the hardening step (γ) is preferably performed by steam curing.

In the method for producing a hydraulically hardened product, the hardening step (γ) is preferably performed for 1 to 10 hours, more preferably for 1.5 to 8 hours, still more preferably for 2 to 6 hours.

The present invention also relates to a method for hardening a hydraulic material composition containing the aluminosilicate-containing composition and/or the hardening accelerator composition and a hydraulic material at 15°C to 90°C. The hardening temperature is preferably 20°C to 85°C, more preferably 30°C to 85°C, still more preferably 35°C to 80°C, particularly preferably 40°C to 60°C.

The present invention also relates to a method for enhancing early strength of a hydraulically hardened product, the method including adding the aluminosilicate-containing composition to a hydraulic material to obtain a composition and hardening the composition obtained in the adding step.

The adding step and the hardening step in the early strength enhancing method are preferably the same as the adding step (β) in the method for producing a hydraulic material composition and the hardening step (γ) in the method for producing a hydraulically hardened product, respectively.

## EXAMPLES

The present invention is described in more detail below with reference to examples, but the present invention is not limited to these examples. It should be noted that the terms "part(s)" and "%" refer to "part(s) by weight" and "% by mass", respectively, unless otherwise stated.

<Measurement of average particle size of aluminosilicate-containing composition>

First, an aqueous dispersion prepared was filtered using filter paper No. 2 (Advantec Co., Ltd.) to remove impurities and the like, and the obtained filtrate was subjected to the following operations.

The Z-average particle size was determined from the scattering intensity of the aqueous dispersion containing 0.1% by mass of the solids of the aluminosilicate-containing composition measured by a dynamic light scattering method using a particle size analyzer.

Apparatus: Zetasizer Nano, available from Malvern
Measurement temperature: 20.0°C
Measurement solvent: ion-exchanged water

<Gel permeation chromatography (GPC)>

The weight average molecular weight (Mw) of the water-soluble polymer was measured by gel permeation chromatography (GPC) under the following measurement conditions.

(GPC analysis method)

Apparatus: Alliance (2695), available from Waters Corporation Analysis software: Empower 2 professional + GPC option, available from Waters Corporation
Column used: TSKguard columns SWXL + TSKgel G4000SWXL + G3000SWXL + G2000SWXL, available from Tosoh Corporation
Detector: differential refractive index (RI) detector (2414,ss available from Waters Corporation), multi-wavelength UV-vis photodiode array (PDA) detector (2996, available from Waters Corporation)
Eluent: solution prepared by dissolving 115.6 g of sodium acetate trihydrate in a solvent mixture of 10,999 g of water and 6,001 g of acetonitrile, with the pH thereof adjusted to 6.0 with acetic acid.
Standards for calibration curve preparation: polyethylene glycols (peak top molecular weights (Mp) of 272500, 219300, 107000, 50000, 24000, 12600, 7100, 4250, and 1470) Calibration curve: a third-order polynomial was created based on the Mp values and elution times of the standards.
Flow rate: 1 mL/min
Column temperature: 40°C
Measuring time: 45 minutes
Amount of standard sample solution injected: 100 μL (eluent solution with polymer concentration of 0.1% by mass)
Amount of polymer sample solution injected: 100 μL (eluent solution with polymer concentration of 0.5% by mass)

(GPC analysis conditions (polymer analysis))

In an obtained RI chromatogram, the parts where the baselines just before and immediately after the elution of the polymer were stable in flat were connected to each other by a straight line, and the polymer was detected/analyzed. When a monomer peak or a monomer-derived impurity peak measured partially overlapped with the polymer peak, the polymer portion was separated from the monomer portion and the impurity portion by vertically dividing the monomer or impurity peak and the polymer peak at the most recessed part of the overlapping part between the peaks, and then the molecular weight and the molecular weight distribution of only the polymer portion were measured. When the recessed part was absent, the calculation was carried out altogether.

The polymer content was calculated from the ratio of peak areas obtained using an RI detector, as follows.

Polymer content = (Polymer peak area)/(Polymer peak area + Monomer peak area and impurity peak area)

<Production Example 1>

A solution (1a) was prepared by dissolving 0.3 parts of L-ascorbic acid in 191.2 parts of water. A solution (1b) was prepared by dissolving 2.2 parts of 3-mercaptopropionic acid in 13.5 parts of water. A solution (1c) was prepared by dissolving 32.2 parts of acrylic acid (AA) in 8.0 parts of water.

A reaction vessel equipped with a thermometer, a stirrer, a dropping device, a nitrogen inlet tube, and a reflux condenser was charged with 30.0 parts of water and 209.8 parts of an 80% aqueous solution of an unsaturated polyalkylene glycol ether monomer (IPN-50) obtained by adding an average of 50 mol of ethylene oxide to 3-methyl-3-buten-1-ol. Then, the temperature was raised to 60°C under a nitrogen atmosphere, and then 12.8 parts of a 2% aqueous solution of hydrogen peroxide was added. Next, the solutions (1a), (1b), and (1c) were mixed together, and the reaction solution was neutralized to pH 7.0 using an aqueous sodium hydroxide solution at a temperature not higher than the polymerization reaction temperature. Thereby, a polymer solution containing a copolymer (1) was obtained. The weight average molecular weight was 15,000.

<Synthesis Example 1>

A solution (A1) was prepared by dissolving 101.0 g of aluminum sulfate 14-18 hydrate in 172.0 g of ion-exchanged water, and a solution (B1) was prepared by dissolving 46.8 g of the copolymer (1) (solid content 40%) in 69.1 g of ion-exchanged water. Next, a solution (C1) was prepared by dissolving 90.9 g of sodium metasilicate nonahydrate in

397.0 g of ion-exchanged water. At room temperature, to 111.5 g of water was added 11.7 g of the copolymer (1) (solid content 40%), and the contents were stirred. The mixture was mixed with the solutions (A1), (B1), and (C1) to obtain an aluminosilicate composition (1). The aluminosilicate-containing composition had an average particle size of 90 nm.

<Synthesis Examples 2 and 3>

In each of Synthesis Examples 2 and 3, aluminum sulfate 14-18 hydrate, the copolymer (1), and sodium metasilicate nonahydrate, in amounts such that the Si/Al ratio was as shown in Table 1, were reacted by the method according to Synthesis Example 1. Thus, aluminosilicate-containing compositions (2) and (3) were synthesized. The aluminosilicate-containing compositions had average particle sizes shown in Table 1.

<Synthesis Example 4>

A solution (A2) was prepared by dissolving 24.7 g of aluminum sulfate 14-18 hydrate in 41.8 g of ion-exchanged water, and a solution (B2) was prepared by mixing 1.4 g of the copolymer (1) (solid content 40%) and 1.4 g of triethanolamine (solid content 40%). Next, a solution (C2) was prepared by dissolving 22.1 g of sodium metasilicate nonahydrate in 50.9 g of ion-exchanged water. At room temperature, to 62.5 g of water were added 5.7 g of the copolymer (1) (solid content 40%) and 5.7 g of triethanolamine (solid content 40%), and the contents were stirred. The mixture was mixed with the solutions (A2), (B2), and (C2) to obtain an aluminosilicate-containing composition (4). The aluminosilicate-containing composition had an average particle size of 310 nm.

<Synthesis Examples 5 to 17>

In each of Synthesis Examples 5 to 17, aluminum sulfate 14-18 hydrate, the copolymer (1), any of the amine compounds shown in Table 1, and sodium metasilicate nonahydrate, in amounts such that the Si/Al ratio was as shown in Table 1, were reacted by the method according to Synthesis Example 4. Thus, aluminosilicate compositions (5) to (17) were synthesized. The aluminosilicate-containing compositions had average particle sizes as shown in Table 1.

<Synthesis Example 18>

A solution (A3) was prepared by dissolving 23.5 g of aluminum sulfate 14-18 hydrate in 40.0 g of ion-exchanged water, and a solution (B3) was prepared by dissolving 11.4 g of the copolymer (1) (solid content 40%) in 48.0 g of ion-exchanged water. Next, a solution (C3) was prepared by dissolving 21.1 g of sodium metasilicate nonahydrate in 48.5 g of ion-exchanged water. Next, a solution (D3) was prepared by dissolving 4.0 g of zinc sulfate (solid content 56.0%) in 20.0 g of ion-exchanged water. At room temperature, to 27.2 g of water was added 2.85 g of the copolymer (1) (solid content 40%), and the contents were stirred. The mixture was mixed with the solutions (A3), (B3), (C3), and (D3) to obtain an aluminosilicate-containing composition (18). The aluminosilicate-containing composition had an average particle size of 65 nm.

<Synthesis Examples 19 to 26>

In each of Synthesis Examples 19 to 26, aluminum sulfate 14-18 hydrate, the copolymer (1), any of the metal compounds shown in Table 1, and sodium metasilicate nonahydrate, in amounts such that the Si/Al ratio was as shown in Table 1, were reacted by the method according to Synthesis Example 18. Thus, aluminosilicate compositions (19) to (26) were synthesized. The aluminosilicate-containing compositions had average particle sizes as shown in Table 1. Here, the molar ratio of the metal compound is based on 100 mol% of the inorganic salts including the aluminum sulfate 14-18 hydrate, sodium metasilicate nonahydrate, and metal compound.

<Synthesis Example 27>

A solution (E1) was prepared by adjusting the pH of 104.8 g of the copolymer (1) (solid content 40%) to 8 with a 30% by weight sodium hydroxide solution. Next, a solution (E2) was prepared by dissolving 105.0 g of calcium nitrate tetrahydrate in 66.4 g of ion-exchanged water. In addition, a solution (3) was prepared by dissolving 95.9 g of sodium metasilicate nonahydrate in 179.8 g of ion-exchanged water. The solution (E1) was heated to 75°C, and the solutions (E1) and (E2) were added dropwise to the solution (3) over 18 minutes under a nitrogen atmosphere to obtain a calcium silicate composition (27). The calcium silicate composition had an average particle size of 280 nm.

[Table 1]

| | Copolymer (1) | Amine | | Metal compound | | Average particle size | Si/Al ratio |
|---|---|---|---|---|---|---|---|
| | wt%/particle | Compound name | wt%/particle | Compound name | mol% | (nm) | |
| Synthesis Example 1 | 25 | - | - | - | - | 90 | 1 |
| Synthesis Example 2 | 100 | - | - | - | - | 22 | 1 |
| Synthesis Example 3 | 25 | - | - | - | - | 15 | 0.25 |
| Synthesis Example 4 | 12.5 | TEA | 12.5 | - | - | 310 | 1 |
| Synthesis Example 5 | 12.5 | TIPA | 12.5 | - | - | 190 | 1 |
| Synthesis Example 6 | 25 | D.I.P.A. | 12.5 | - | - | 130 | 1 |
| Synthesis Example 7 | 25 | TMEDA | 12.5 | - | - | 270 | 1 |
| Synthesis Example 8 | 25 | EDEA | 12.5 | - | - | 280 | 1 |
| Synthesis Example 9 | 25 | DMAE | 12.5 | - | - | 250 | 1 |
| Synthesis Example 10 | 25 | 1DMA2P | 12.5 | - | - | 270 | 1 |
| Synthesis Example 11 | 12.5 | TIPA | 12.5 | - | - | 130 | 1.33 |
| Synthesis Example 12 | 10 | TIPA | 15 | - | - | 370 | 1 |
| Synthesis Example 13 | 15 | TIPA | 10 | - | - | 184 | 1 |
| Synthesis Example 14 | 25 | TIPA | 12.5 | - | - | 111 | 1 |
| Synthesis Example 15 | 12.5 | TIPA | 25 | - | - | 305 | 1 |
| Synthesis Example 16 | 25 | TIPA | 25 | - | - | 260 | 1 |
| Synthesis Example 17 | 25 | TIPA | 50 | - | - | 313 | 1 |
| Synthesis Example 18 | 25 | - | - | $ZnSO_4$ | 9.1 | 80 | 1 |
| Synthesis Example 19 | 25 | - | - | $MgSO_4$ | 9.1 | 80 | 1 |
| Synthesis Example 20 | 25 | - | - | $Li_2SO_4$ | 9.1 | 82 | 1 |
| Synthesis Example 21 | 25 | - | - | $Na_2SO_4$ | 9.1 | 65 | 1 |

(continued)

| | Copolymer (1) | Amine | | Metal compound | | Average particle size | Si/Al ratio |
|---|---|---|---|---|---|---|---|
| | wt%/particle | Compound name | wt%/particle | Compound name | mol% | (nm) | |
| Synthesis Example 22 | 25 | - | - | $NaNO_3$ | 9.1 | 70 | 1 |
| Synthesis Example 23 | 25 | - | - | $Na_2CO_3$ | 9.1 | 92 | 1 |
| Synthesis Example 24 | 25 | - | - | $CH_3COONa$ | 9.1 | 120 | 1 |
| Synthesis Example 25 | 25 | - | - | $Na_2SO_4$ | 16.7 | 76 | 1 |
| Synthesis Example 26 | 25 | - | - | $Na_2SO_4$ | 9.1 | 300 | 1.5 |

The descriptions in Table 1 are as follows.

TEA: triethanolamine
TIPA: triisopropanolamine
DIPA: diisopropanolamine
TMEDA: tetramethylethylenediamine
EDEA: ethyldiethanolamine
DMAE: dimethylaminoethanol
1DMA2P: 1-dimethylamino-2-propanol

The values expressed by "wt%/particle" in Table 1 represent the amounts in 100% by mass of the aluminosilicate particles.
Various tests were conducted using the aluminosilicate-containing compositions (1) to (26) and calcium silicate composition (27). The results are shown in Tables 3 to 6.

<Early strength development evaluation>

(Mortar test)

Preparation of mortar sample

The mortar test was performed at a temperature of 20°C ± 1°C and a relative humidity of 60% ± 15%. The mortar mix is shown in Table 2.
Here, the details of the symbols are as follows.

C: cement (ordinary Portland cement, available from Taiheiyo Cement Corporation) LS: ground calcium carbonate (Softon 3200, available from Marutou Co., Ltd.)
CC: calcined clay (Hyogo Clay Co., Ltd.)
BFS: ground granulated blast furnace slag (SPIRITS 4000, available from Nippon Steel Cement Co., Ltd.)
g: gypsum (calcium sulfate dihydrate, available from Merck)
S: fine aggregate (standard sand for cement strength testing, available from Japan Cement Association)
W: a solution of the sample and antifoaming agent in ion-exchanged water
B: powder (material other than S and W)

W contained an antifoaming agent and any of the additives for hydraulic materials obtained in the following examples and comparative examples, which were sufficiently and uniformly dissolved in ion-exchanged water.
Using a mortar mixer (Hobart mixer, model number: N-50), S and W were added to a kneading vessel and

kneaded at speed 1 for 30 seconds. While further mixing at speed 1, C was added over a period of 15 seconds. After 60 seconds from the start of kneading, the speed was changed to speed 2, and kneading was continued for an additional 30 seconds. The mixer was then stopped, and the mortar was scraped off for 30 seconds and allowed to stand for 60 seconds. Thereafter, kneading was continued for an additional 60 seconds at speed 2 to prepare mortar. The air content was adjusted to lower than 3.0% by adding an oxyalkylene antifoaming agent.

[Table 2]

| | Component (g) | | | | | | | |
|---|---|---|---|---|---|---|---|---|
| | C | LS | CC | BFS | g | S | W | W/B |
| Mortar mix (1) | 535 | - | - | - | - | 1350 | 214 | 0.4 |
| Mortar mix (2) | 374.5 | 160.5 | - | - | - | 1350 | 214 | 0.4 |
| Mortar mix (3) | 267.5 | 80.3 | 160.5 | - | 26.7 | 1350 | 267.5 | 0.5 |
| Mortar mix (4) | 267.5 | - | - | 267.5 | - | 1350 | 214 | 0.4 |

(Compressive strength measurement)

After kneading, a sample for compressive strength test was prepared and subjected to compressive strength measurement under the following conditions. The results are shown in Tables 3 to 6.

Preparation of specimen: 50 mm × 100 mm

Curing of specimen (curing at room temperature): The specimen was cured in temperature- and humidity-controlled air at a temperature of 20°C and a humidity of 50% for 24 hours.
Curing of specimen (curing in water): After the curing in temperature- and humidity-controlled air at a temperature of 20°C and a humidity of 50% for 24 hours, the specimen was further cured in water at a temperature of 20°C for 27 days.
Polishing of specimen: polishing of a surface of the specimen (using a specimen polishing finishing machine)
Compression strength measurement: automatic compression strength testing machine (Maekawa Testing Machine Mfg. Co., Ltd.)

<Measurement of heat of hydration>

(Preparation of paste sample)

The formulations of the paste samples are shown in Tables 3 to 6. Here,

$$W/C = 0.4:$$

wherein W: a sample and ion-exchanged water;

C: cement (ordinary Portland cement, available from Taiheiyo Cement Corporation);
(1) to (26) represent aluminosilicate-containing compositions; and
(27) represents calcium silicate composition.

The amounts of additives in Tables 3 to 6 are expressed as an amount relative to 100% by mass of the powder (components in mortar other than fine aggregate).
The cement was placed in an ampoule, which was placed in the apparatus, and the temperature was adjusted to 20°C. Next, a mixture of the prepared sample and ion-exchanged water was measured into a syringe, injected into the ampoule whose temperature had been adjusted to 20°C, and kneaded for five minutes to prepare a paste sample.
The heat of hydration of the prepared paste sample was measured under the following conditions.

Heat of hydration meter: Microcalorimeter (TA Instruments)
Temperature: 20°C

The results are shown in Tables 3 to 6.

[Table 3]

| | Formulation | Additive | | 1-day strength | 28-day strength | 24-hour heat generation |
|---|---|---|---|---|---|---|
| | | (Synthesis example) | Addition amount (wt%/powder) | ($N/mm^2$) | ($N/mm^2$) | (mW/g) |
| Example (1) | (1) | (4) | 1.0 | - | - | 198.7 |
| Example (2) | (1) | (5) | 1.0 | - | - | 206.5 |
| Example (3) | (1) | (6) | 1.0 | - | - | 201.7 |
| Example (4) | (1) | (7) | 1.0 | - | - | 200.5 |
| Example (5) | (1) | (8) | 1.0 | - | - | 202.6 |
| Example (6) | (1) | (9) | 1.0 | - | - | 202.2 |
| Example (7) | (1) | (10) | 1.0 | - | - | 195.4 |
| Example (8) | (1) | (11) | 1.0 | - | - | 212.5 |
| Example (9) | (1) | (12) | 1.0 | - | - | 191.6 |
| Example (10) | (1) | (13) | 1.0 | - | - | 205.9 |
| Example (11) | (1) | (14) | 1.0 | 37.0 | 81.8 | 221.4 |
| Example (12) | (1) | (15) | 1.0 | - | - | 210.5 |
| Example (13) | (1) | (16) | 1.0 | - | - | 230.6 |
| Example (14) | (1) | (17) | 1.0 | - | - | 252.4 |
| Example (15) | (1) | (18) | 1.0 | - | - | 192.3 |
| Example (16) | (1) | (19) | 1.0 | - | - | 185.6 |
| Example (17) | (1) | (20) | 1.0 | - | - | 189.2 |
| Example (18) | (1) | (21) | 1.0 | 31.4 | 81.5 | 200.4 |
| Example (19) | (1) | (22) | 1.0 | 31.4 | - | 193.5 |
| Example (20) | (1) | (23) | 1.0 | 31.7 | 83.0 | 193.7 |
| Example (21) | (1) | (24) | 1.0 | 30.4 | - | 183.5 |
| Example (22) | (1) | (25) | 1.0 | - | - | 196.9 |
| Example (23) | (1) | (26) | 1.0 | - | - | 200.3 |
| Comparative Example (1) | (1) | - | - | 21.7 | 79.7 | - |
| Comparative Example (2) | (1) | (2) | 1.0 | - | - | 116.1 |
| Comparative Example (3) | (1) | (3) | 1.0 | - | - | 165.5 |

[Table 4]

| | Formulation | Additive | | 1-day strength | 28-day strength | 24-hour heat generation |
|---|---|---|---|---|---|---|
| | | (Synthesis example) | Addition amount (wt%/powder) | ($N/mm^2$) | ($N/mm^2$) | (mW/g) |
| Example (24) | (2) | (1) | 0.5 | 19.3 | - | - |
| Example (25) | (2) | (1) | 1.0 | 20.4 | - | - |
| Example (26) | (2) | (1) | 1.8 | 24.2 | - | - |

(continued)

| | Formulation | Additive | | 1-day strength | 28-day strength | 24-hour heat generation |
|---|---|---|---|---|---|---|
| | | (Synthesis example) | Addition amount (wt%/powder) | ($N/mm^2$) | ($N/mm^2$) | (mW/g) |
| Example (27) | (2) | (14) | 1.0 | 24.6 | - | - |
| Example (28) | (2) | (16) | 1.0 | 32.3 | - | - |
| Example (29) | (2) | (21) | 1.0 | 27.0 | - | - |
| Comparative Example (4) | (2) | - | - | 15.3 | - | - |

[Table 5]

| | Formulation | Additive | | 1-day strength | 28-day strength | 24-hour heat generation |
|---|---|---|---|---|---|---|
| | | (Synthesis example) | Addition amount (wt%/powder) | ($N/mm^2$) | ($N/mm^2$) | (mW/g) |
| Example (30) | (3) | (1) | 1.0 | 11.3 | 65.0 | - |
| Example (31) | (3) | (14) | 0.5 | 10.3 | 67.7 | - |
| Example (32) | (3) | (14) | 1.0 | 12.4 | 71.3 | - |
| Comparative Example (5) | (3) | - | - | 7.9 | 52.8 | - |
| Comparative Example (6) | (3) | (27) | 1.0 | 9.9 | 62.1 | - |

[Table 6]

| | Formulation | Additive | | 1-day strength | 28-day strength | 24-hour heat generation |
|---|---|---|---|---|---|---|
| | | (Synthesis example) | Addition amount (wt%/powder) | ($N/mm^2$) | ($N/mm^2$) | (mW/g) |
| Example (33) | (4) | (1) | 0.5 | 8.1 | - | - |
| Example (34) | (4) | (14) | 0.5 | 8.9 | - | - |
| Example (35) | (4) | (14) | 1.0 | 11.1 | - | - |
| Comparative Example (7) | (4) | - | - | 5.8 | - | - |

## Claims

**1.** An aluminosilicate-containing composition comprising:

an aluminosilicate; and
a water-soluble polymer,
the aluminosilicate-containing composition further comprising at least one of an amine having a molecular weight of not more than 1,000 or a metal compound.

**2.** An aluminosilicate-containing composition comprising:

an aluminosilicate; and
a water-soluble polymer,

the aluminosilicate-containing composition being for use in a hydraulic material composition containing at least one selected from the group consisting of a filler and a substance having at least one of latent hydraulicity or pozzolanic activity.

**3.** The aluminosilicate-containing composition according to claim 1 or 2,
wherein the water-soluble polymer is contained in an amount of 5 to 100% by mass relative to 100% by mass of the aluminosilicate.

**4.** The aluminosilicate-containing composition according to any one of claims 1 to 3,
wherein the aluminosilicate is contained in an amount of 0.01 to 50% by mass in 100% by mass of the aluminosilicate-containing composition.

**5.** The aluminosilicate-containing composition according to any one of claims 1, 3, and 4,
wherein the amine is at least one selected from the group consisting of a primary amine, a secondary amine, and a tertiary amine.

**6.** The aluminosilicate-containing composition according to any one of claims 1 and 3 to 5,
wherein the amine and the metal compound are contained in a total amount of 0.01 to 500% by mass relative to 100% by mass of the aluminosilicate.

**7.** The aluminosilicate-containing composition according to any one of claims 2 to 4,
wherein the substance having at least one of latent hydraulicity or pozzolanic activity is at least one selected from the group consisting of slag, fly ash, clay, metakaolin, silica fume, silica powder, cinder ash, clinker ash, husk ash, bentonite, and calcined clay.

**8.** The aluminosilicate-containing composition according to any one of claims 2 to 4 and 7,
wherein the filler is at least one selected from the group consisting of calcium carbonate, precipitated calcium carbonate, concrete fines, carbonated concreate fines , waste concrete, and gypsum.

**9.** The aluminosilicate-containing composition according to any one of claims 1 to 8,

wherein the aluminosilicate-containing composition has an average particle size of 10 to 2,500 nm as measured by the following measurement method: <Method for measuring average particle size>
the average particle size is determined from a scattering intensity of an aqueous dispersion containing 0.1% by mass of the solids of the aluminosilicate-containing composition measured by a dynamic light scattering method using a particle size analyzer.

**10.** The aluminosilicate-containing composition according to any one of claims 1 to 9,
wherein the water-soluble polymer has at least one functional group selected from a carboxyl group, a phosphoric acid group, a sulfonic acid group, salts of these, a phosphate ester group, and a hydroxy group.

**11.** The aluminosilicate-containing composition according to claim 10,
wherein the water-soluble polymer further has a (poly)oxyalkylene group.

**12.** A hydraulic material composition comprising:

an aluminosilicate;
a water-soluble polymer; and
at least one selected from the group consisting of a filler and a substance having at least one of latent hydraulicity or pozzolanic activity.

**13.** A method for enhancing early strength of a hydraulically hardened product, the method comprising:

adding the aluminosilicate-containing composition according to any one of claims 1 to 11 to a hydraulic material to obtain a composition; and
hardening the composition obtained in the addition step.

## INTERNATIONAL SEARCH REPORT

International application No.
**PCT/JP2024/018084**

### A. CLASSIFICATION OF SUBJECT MATTER

***C04B 22/08***(2006.01)i; ***C04B 14/10***(2006.01)i; ***C04B 14/28***(2006.01)i; ***C04B 18/08***(2006.01)i; ***C04B 18/14***(2006.01)i; ***C04B 24/12***(2006.01)i; ***C04B 24/24***(2006.01)i; ***C04B 24/26***(2006.01)i; ***C04B 28/02***(2006.01)i
FI: C04B22/08 Z; C04B14/10 Z; C04B14/28; C04B18/08 Z; C04B18/14 A; C04B24/12 A; C04B24/24 A; C04B24/26 B; C04B24/26 E; C04B24/26 F; C04B28/02

According to International Patent Classification (IPC) or to both national classification and IPC

### B. FIELDS SEARCHED

Minimum documentation searched (classification system followed by classification symbols)

C04B22/08; C04B14/10; C04B14/28; C04B18/08; C04B18/14; C04B24/12; C04B24/24; C04B24/26; C04B28/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2018/017441 A1 (UNITED STATES GYPSUM COMPANY) 25 January 2018 (2018-01-25) paragraphs [0055], [0203]-[0204], table 8 | 1-8, 10, 12-13 |
| A | entire text, all drawings | 9, 11 |
| X | JP 2022-011743 A (NIPPON SHOKUBAI CO., LTD.) 17 January 2022 (2022-01-17) claims, paragraphs [0006], [0117]-[0123] | 2-4, 7-13 |
| A | entire text, all drawings | 1, 5-6 |
| X | CN 109678413 A (ZHONGSHAN LINGWAN NEW MATERIAL TECHNOLOGY CO., LTD.) 26 April 2019 (2019-04-26) paragraphs [0011]-[0012], [0022] | 2-4, 7, 9-10, 12-13 |
| A | entire text, all drawings | 1, 5-6, 8, 11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 July 2024** | **30 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/018084**

**C. DOCUMENTS CONSIDERED TO BE RELEVANT**

| Category* | Citation of document, with indication, where appropriate, of the relevant passages | Relevant to claim No. |
|---|---|---|
| A | JP 2016-175787 A (NIPPON SHOKUBAI CO., LTD.) 06 October 2016 (2016-10-06) entire text, all drawings | 1-13 |
| A | WO 98/51640 A1 (MBT HOLDING AG) 19 November 1998 (1998-11-19) entire text, all drawings | 1-13 |
| A | JP 2018-111623 A (NIPPON SHOKUBAI CO., LTD.) 19 July 2018 (2018-07-19) entire text, all drawings | 1-13 |
| A | JP 4-175397 A (NIPPON CHEMICAL INDUSTRIAL CO., LTD.) 23 June 1992 (1992-06-23) entire text, all drawings | 1-13 |

Form PCT/ISA/210 (second sheet) (July 2022)

**INTERNATIONAL SEARCH REPORT**
**Information on patent family members**

International application No.
**PCT/JP2024/018084**

| Patent document cited in search report | Publication date (day/month/year) | Patent family member(s) | Publication date (day/month/year) |
|---|---|---|---|
| WO 2018/017441 A1 | 25 January 2018 | JP 2019-525885 A<br>paragraphs [0043], [0133]-[0134], table 8<br>CN 109476558 A | |
| JP 2022-011743 A | 17 January 2022 | (Family: none) | |
| CN 109678413 A | 26 April 2019 | (Family: none) | |
| JP 2016-175787 A | 06 October 2016 | (Family: none) | |
| WO 98/51640 A1 | 19 November 1998 | JP 2000-516191 A<br>entire text, all drawings<br>US 6008275 A | |
| JP 2018-111623 A | 19 July 2018 | (Family: none) | |
| JP 4-175397 A | 23 June 1992 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022011743 A
- JP H0986990 A
- JP 2001220417 A
- JP 2002121055 A
- JP 2002121056 A
- JP H10236858 A
- JP 2004307590 A
- JP 2008517080 A
- JP 2006052381 A